(19) **Europäisches Patentamt / European Patent Office / Office européen des brevets**

(11) **EP 2 023 094 B1**

(12) **EUROPEAN PATENT SPECIFICATION**

(45) Date of publication and mention of the grant of the patent:
**07.01.2015  Bulletin 2015/02**

(51) Int Cl.:
**G01D 5/347** (2006.01)

(21) Application number: **08012826.7**

(22) Date of filing: **16.07.2008**

(54) **Reference signal generating configuration for an interferometric miniature grating encoder readhead using fiber optic receiver channels**

Konfiguration zur Erzeugung eines Referenzsignals für ein interferometrisches Miniatur-Rasterungskodiergerät mithilfe von Glasfaserempfangskanälen

Signal de référence générant une configuration pour une tête de lecture d'encodeur de réseau miniature utilisant des canaux de récepteur optique à fibre

(84) Designated Contracting States:
**DE FR GB**

(30) Priority: **24.07.2007  US 782608**

(43) Date of publication of application:
**11.02.2009  Bulletin 2009/07**

(73) Proprietor: **Mitutoyo Corporation
Kawasaki-shi, Kanagawa 213-0012 (JP)**

(72) Inventors:
• **Zwilling, Avron
Redmond, WA 98052 (US)**
• **Tobiason, Joseph D.
Woodinville, WA 98077-8209 (US)**
• **Harsila, Scott
Bothell, WA 98012 (US)**
• **Masreliez, Karl Gustav
Banyuls-sur-mer 66650 (FR)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
| EP-A2- 1 475 613 | EP-A2- 1 510 789 |
| EP-A2- 1 521 060 | US-A- 4 573 000 |
| US-A- 5 678 319 | |

**Description**

BACKGROUND

This invention relates generally to displacement sensing optical encoders, and more particularly to providing a reference signal for a miniature fiber optic encoder utilizing optical fibers as receiver elements.

Various miniature fiber optic grating encoders that use fiber optic receiver channels are known, including those disclosed in U.S. Patent Nos. 6,906,315; 7,053,362; and 7,126,696, (the '315, '362, and '696 patents) each of which is hereby incorporated herein by reference in its entirety. Such miniature encoders offer a desirable combination of features, which may include extremely small size, very high accuracy, electrical noise immunity, and very high speed operation.

Many motion control and/or position measurement systems, or the like, include provisions for inputting a reference signal that is usable to identify a particular period within a grating scale. The reference signal, generally corresponding to a feature that is fixed relative to the grating scale, provides a reference point that eliminates the position ambiguities that may otherwise arise in incremental type displacement measuring systems, which count signal periods as a basis for long range measurements.

However, a reference signal generating configuration that is easily and economically combinable with miniature fiber optic grating encoders such as those included in the above references, and that provides similar desirable features, is not known. Such a reference signal generating configuration would be desirable.

SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

Briefly, the present invention is directed to providing a miniature fiber optic readhead and scale arrangement for measuring displacement that also includes a miniature fiber optic reference signal generating configuration usable to provide a reference position indication. In various embodiments, the scale includes a scale track comprising a first type of track portion providing first level of zero order reflectance (e.g., a phase grating), and a reference mark providing a second level of zero order reflectance (e.g., a mirror). Respective fiber optic reference signal receiver channel apertures receive detectably different amounts of zero order reflected light depending on their proximity and/or overlap with the reference mark. A reference mark according to this invention has length or boundary spacing dimensions along the measuring axis direction that are determined based on certain fiber optic reference signal receiver channel aperture dimensions in the readhead, which establishes a desirable relationship between the resulting respective reference mark signals.

In some configurations a fiber optic readhead and scale track that provides the reference position indication is separate from a fiber optic readhead and scale track that provides periodic incremental measurement signals. In some configurations an integrated fiber optic readhead and an integrated scale track provide both the reference position indication and the periodic incremental measurement signals.

Importantly, a fiber optic reference signal generating configuration according to this invention offers desirable features similar to those of known miniature fiber optic grating encoders that provide incremental measurement (e.g., those disclosed in the '696 patent). For example, importantly, a fiber optic reference signal generating configuration according to this invention can be used at operating gaps similar or identical to the interferometric type fiber optic encoders disclosed in the '696 patent. In addition it offers similar extremely small size, high accuracy, electrical noise immunity, and very high speed operation. A miniature fiber optic reference signal generating configuration according to this invention is thus readily and economically combinable with desirable high-accuracy miniature fiber optic incremental measurement encoders.

Hence, the invention overcomes the disadvantages of prior art optical displacement sensing devices and provides new application possibilities with an ultra-compact, highly accurate, economical and high speed configuration.

DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIGURE 1 is an isometric view of first embodiment of a miniature fiber optic readhead and scale arrangement that includes a reference signal generating configuration according to this invention;

FIGURE 2 is an isometric view of a second embodiment of a miniature fiber optic readhead and scale arrangement that includes a reference signal generating configuration according to this invention;

FIGURE 3 is an isometric view of a third embodiment of a miniature fiber optic readhead and scale arrangement that includes a reference signal generating configuration according to this invention;

FIGURE 4 is an isometric view of a fourth embodiment of a miniature fiber optic readhead and scale arrangement that includes a reference signal generating configuration according to this invention;

FIGURE 5 is an isometric view showing one exemplary embodiment of a grating and reference mark structure according to this invention;

FIGURES 6A and 6B are isometric views schematically showing various aspects of a first embodiment of a reference signal generating configuration according to this invention;

FIGURE 7 is an isometric view schematically showing a portion of a second embodiment of a reference signal generating configuration according to this invention;

FIGURE 8 is a diagram showing the reference signals generated according to the reference signal generating configurations of FIGURES 6A, 6B, and FIGURE 7;

FIGURE 9 is an isometric view schematically showing various aspects of the operation of a first integrated reference signal and incremental signal generating configuration according to this invention, including a third embodiment of a reference signal generating configuration according to this invention;

FIGURE 10 is an isometric view showing a portion of the integrated reference signal and incremental signal generating configuration shown in FIGURE 9, including additional details;

FIGURE 11 is an isometric view showing a portion of a second integrated reference signal and incremental signal generating configuration according to this invention, including a fourth embodiment of a reference signal generating configuration according to this invention; and

FIGURE 12 is a diagram schematically showing the reference signals generated according to the integrated reference signal and incremental signal generating configurations of FIGURES 10, and 11.

## DETAILED DESCRIPTION

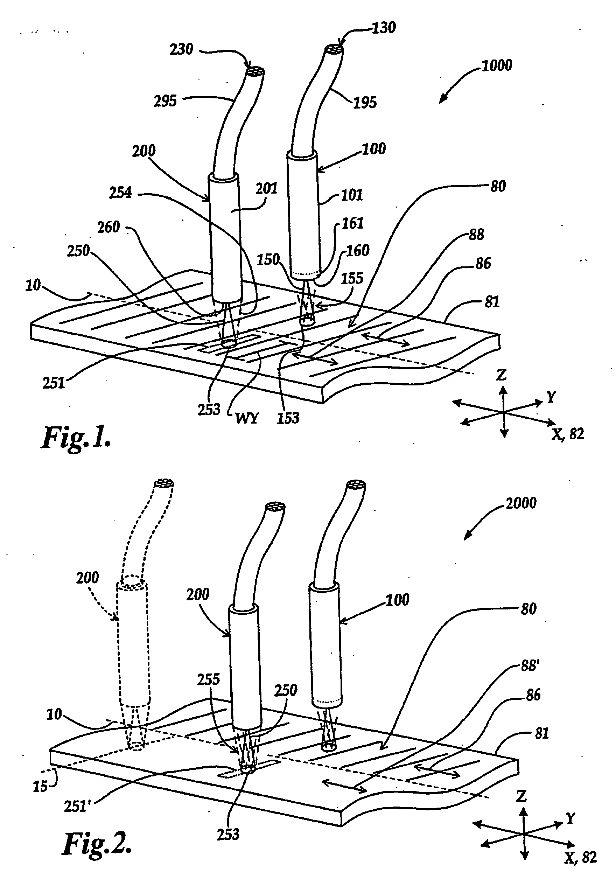

FIGURE 1 is an isometric view of first embodiment of a miniature fiber optic readhead and scale arrangement 1000 that includes a reference signal generating configuration according to this invention. As shown in FIGURE 1, the miniature fiber optic readhead and scale arrangement 1000 includes a scale member 81 that includes a scale grating 80, an incremental readhead 100, and a reference mark readhead 200. It will be appreciated the readheads 100 and 200 will generally be mounted rigidly relative to one another, or formed as a single unit, so that their displacements are synchronized.

An orthogonal XYZ coordinate system may be defined such that the y-axis is parallel to the bars of the scale grating 80, the z-axis is normal to the surface of the scale grating 80, and the x-axis is orthogonal to the y-z plane. A measuring axis 82 is parallel to the x-axis. In operation, the scale member 81 displaces along the measuring axis 82 such that the readhead 100 is displaced along an incremental measuring scale track 86 that includes the scale grating 80, and the readhead 200 is displaced along a reference scale track 88. In FIGURE 1, an approximate boundary between the incremental measuring scale track 86 and reference scale track 88 is indicated by a dashed line 10. In the embodiment shown in FIGURE 1, the reference scale track 88 generally includes the scale grating 80. However, importantly, the reference scale track 88 also includes one or more reference mark zones 251, described in greater detail below.

The incremental readhead 100 may be a prior art miniature fiber optic readhead that comprises a ferrule 101 that houses and positions the ends of a plurality of optical fibers 130 that are included in a fiber-optic cable 195. In various embodiments, the incremental readhead 100 may comprise any of the types of incremental readheads described in the incorporated references. In the embodiment shown in FIGURE 1, the incremental readhead 100 comprises an interferometric-type readhead, described in detail in the incorporated '696 patent. Briefly, in operation, the readhead 100 outputs a diverging coherent source light 150 from the central one of the optical fibers 130, which illuminates the scale grating 80 at an illumination spot 153, where it is reflected and diffracted to provide scale light 155. In various embodiments, the scale grating 80 is a phase grating configured to suppress zero-order reflection. Therefore, the scale light 155 comprises primarily +/-first-order diffracted lights that are reflected to the readhead 100. The +/- first-order diffracted lights form a field of interference fringes proximate to a receiver plane 160 of a phase mask element 161. The phase mask element 161 provides a plurality of spatial filters at the receiver plane 160, having different spatial phases over the ends of the outer optical fibers 130, in order to provide a plurality of fiber optic incremental measurement signal receiver channels, as described in the '696 patent. As a result of the spatial filtering, the fiber-optic incremental measurement signal receiver channels may output periodic optical signals having different spatial phases (e.g., quadrature signals) when the scale grating 80 is displaced relative to the readhead 100.

The reference mark readhead 200 may comprise a ferrule 201 that houses and positions the ends of a plurality of optical fibers 230 that are included in a fiber-optic cable 295. In various embodiments, the reference mark readhead 200 may comprise various reference signal generating configurations according to this invention, as described in greater detail below. Briefly, in operation, the readhead 200 outputs a diverging source light 250 from the central one of the optical fibers 230, which illuminates the scale grating 80 and/or a reference mark zone 251, at an illumination spot 253. In various embodiments, the diverging source light 250 is advantageously monochromatic and spatially coherent, and may be temporally coherent in some embodiments. In general, the scale grating 80 provides reflected and diffracted scale light that produces a field of interference fringes, in the same manner outlined above with reference to the readhead 100. However, in various embodiments, the reference mark readhead 200 includes no phase mask element. As a result, the ends of the outer optical fibers 230, which provide a plurality of fiber optic reference mark signal receiver channels, simply receive an approximately constant "average" amount of light from that interference fringe field, regardless of displacement.

As previously indicated, in various embodiments, the scale grating 80 is a phase grating configured to suppress zero-order reflection. Thus, a reference mark may be formed by interrupting the structure and/or operation of the scale grating 80 by using at least one mirror-like reference mark portion in the reference mark zone 251. In such a case, when the reference mark zone 251 is located in the illumination spot 253, the mirror-like reference mark portion produces a zero-order reflection that provides a diverging scale light 254, as shown in FIGURE 1. As a result, when the readhead 200 is displaced over the reference mark zone 251, the amount of "averaged" fringe light and the amount of zero-order reflected light that is received and transmitted as a reference signal (by any one of the ends of the outer optical fibers 230 that is used as a fiber optic reference mark signal receiver channel) will be modulated as a function of the amount of overlap of the illumination spot 253 and the reference mark portion(s) reference mark zone 251. A plurality of respective fiber optic reference mark signal receiver channels are used to receive and transmit such modulated optical reference signals, such that a reference position can be precisely determined, as described in greater detail below.

The reference mark portion(s) in the reference mark zone 251 may have a width WY along the Y axis direction, and provide an arrangement of boundaries spaced along the direction of measuring axis 82, as described in greater detail below. The width WY is generally not critical for the reference mark zone 251, or any of the other reference mark zones described herein, provided that it is sufficient to allow a desired alignment tolerance for the readhead 200 within the width of the reference mark scale track 88. In various embodiments, proper spacing of the boundaries of the reference mark portion(s) included in the reference mark zone 251 along the direction of measuring axis 82 may be critical for providing reliable and robust reference signals, and may generally depend on certain dimensions of the configuration of fibers and/or fiber optic reference mark signal receiver channel apertures provided in the readhead 200, as described in greater detail below.

FIGURE 2 is an isometric view of a second embodiment of a miniature fiber optic readhead and scale arrangement 2000 that includes a reference signal generating configuration according to this invention. The operation of the miniature fiber optic readhead and scale arrangement 2000 is in some respects similar to that of miniature fiber optic readhead and scale arrangement 1000 of FIGURE 1, and similarly numbered components may be similar or identical in form and operation, except as otherwise indicated below. As shown in FIGURE 2, the miniature fiber optic readhead and scale arrangement 2000 includes a scale member 81 that includes a scale grating 80, an incremental readhead 100, and a reference mark readhead 200. A primary difference between the miniature fiber optic readhead and scale arrangement 2000 and miniature fiber optic readhead and scale arrangement 1000 is that the structure of reference scale track 88' is different than that of reference scale track 88. In particular, at least that portion of the reference scale track 88' that surrounds the reference mark zone 251' comprises a track portion that provides significant amount of zero order reflectance (e.g. a mirror-like track portion) when illuminated by the diverging source light. The reference mark zone 251' is located within that track portion. In such an embodiment, the reference mark zone 251' includes at least one reference mark portion that provides a significantly less amount of zero order reflectance than the surrounding track portion (e.g. a grating portion designed to suppress zero order reflection). In some embodiments, grating reference mark portion(s) included in the reference mark zone 251' may be identical in structure to the scale grating 80 that extends along the incremental scale track 86. In one embodiment, a mirror-like track portion may extend approximately the entire length the reference scale track 88'.

Briefly, in operation, the readhead 100 is fixed relative to the readhead 200 (e.g., by mounting each readhead in the same mounting bracket) and the scale member 81 displaces along the measuring axis 82 such that the readhead 100 is displaced along an incremental measuring scale track 86 and the readhead 200 is displaced along the reference scale track 88'. In general, when the illumination spot 253 is located along the reference scale track 88' at positions proximate to, but not including, the reference mark zone 251' (e.g., positions comparable to that indicated by the dashed line 15), the mirror-like portion the reference scale track 88' produces a strong zero-order reflection. As a result, the ends of the outer optical fibers 230, which provide a plurality of fiber optic reference mark signal receiver channels, receive an approximately constant and "large" amount of light from that zero-order reflection, over a range of displacements.

A reference mark may be formed by interrupting the structure and/or operation of the mirror-like track portion in the reference mark zone 251'. For example, a grating-type reference mark configured to suppress zero-order reflection may be located in the reference mark zone 251'. In such a case, when the reference mark zone 251' is located in the illumination spot 253, the grating portion reference mark suppresses zero-order reflection and produces +/- first order reflections as indicated by the diverging dashed lines shown above the reference mark zone 251' in FIGURE 2. As a result, when the readhead 200 is displaced over the reference mark zone 251', the amount of zero-order reflected light is significantly reduced. In particular, zero order reflection is suppressed, and a significant portion of the reflected light is deflected away from the readhead 200, as +/-first and third order diffracted light. As a result, the light that is received and transmitted as a reference signal by any particular one of the ends of the outer optical fibers 230 that is used as a fiber optic reference mark signal receiver channel, will be modulated as a function of the amount of overlap of the illumination spot 253 and the reference mark portion(s) in the reference mark zone 251'. A plurality of respective fiber optic reference mark signal receiver channels are used to receive and transmit such modulated optical reference signals, such that a reference position can be precisely determined, as described in greater detail below.

As previously indicated, proper spacing of the boundaries of the reference mark portion(s) included in the reference mark zone 251' along the direction of measuring axis 82 may be critical for providing reliable and robust reference signals, and may generally depend on certain dimensions of the configuration of fibers and/or fiber optic reference mark signal receiver channel apertures provided in the readhead 200, as described in greater detail below.

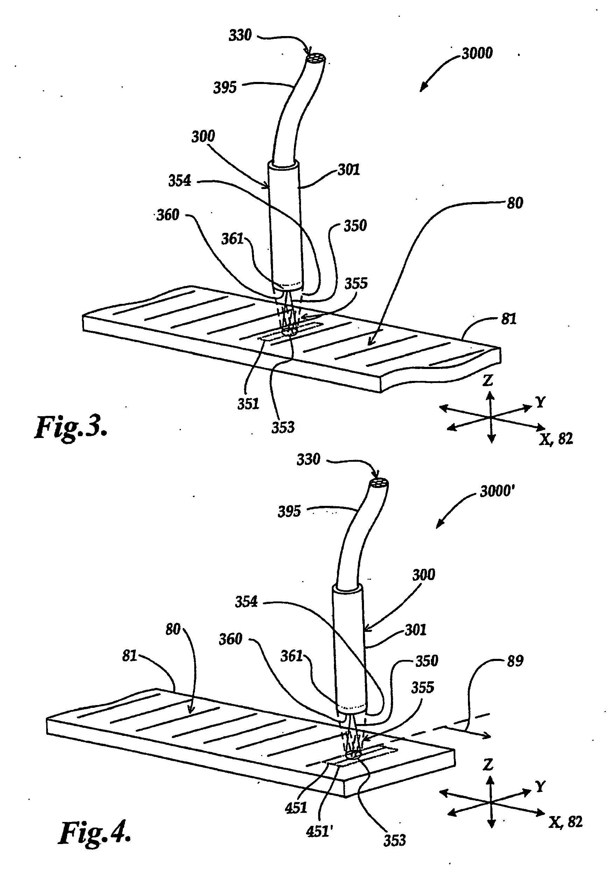

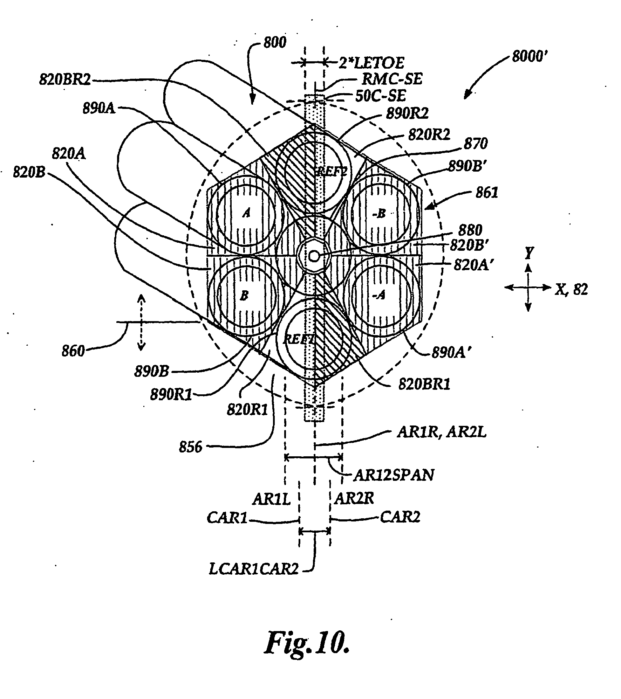

FIGURE 3 is an isometric view of a third embodiment of a miniature fiber optic readhead and scale arrangement 3000 that includes a reference signal generating configuration according to this invention. The operation of the miniature fiber optic readhead and scale arrangement 3000 is in some respects similar to that of miniature fiber optic readhead and scale arrangement 1000 of FIGURE 1, and similarly numbered components may be similar or identical in form and operation, except as otherwise indicated below. As shown in FIGURE 3, the miniature fiber optic readhead and scale arrangement 3000 includes a scale member 81 that has a single scale track that includes a scale grating 80 and a reference mark zone 351, and an integrated incremental and reference mark readhead 300, also referred to simply as an integrated readhead 300. The scale grating 80 may be a phase grating configured to suppress zero-order reflection. The reference mark zone 351 may include at least one mirror-like reference mark portion, as previously outlined with reference to the reference mark zone 251 of FIGURE 1. The integrated readhead 300 comprises a ferrule 101 that houses and positions the ends of a plurality of optical fibers 330 that are included in a fiber-optic cable 395. In various embodiments, the integrated readhead 300 may comprise any of the types of integrated readhead configurations described below with reference to FIGURES 10, 11, and 12, or the like.

Briefly, in operation, the integrated readhead 300 outputs a diverging source light 350 from the central one of the optical fibers 330, which illuminates the scale grating 80 at an illumination spot 353. In various embodiments, the source light 350 is advantageously monochromatic and spatially coherent, and may be temporally coherent in some embodiments. The source light 350 is generally reflected and diffracted to provide scale light 355. Scale light 355 comprises +/-first-order diffracted lights that are reflected to the readhead 300, to form a field of interference fringes proximate to a receiver plane 360 of a phase mask element 361, which spatially filters the interference fringes using phase mask portions having different spatial phases over the ends of certain ones of the outer optical fibers 330, in order to provide a plurality of fiber optic incremental measurement signal receiver channels according to previously described principles. As a result of the spatial filtering, certain fiber-optic receiver channels of the integrated readhead 300 provide incremental measurement signal receiver channels that may output periodic optical signals having different spatial phases (e.g., quadrature signals) when the scale grating 80 is displaced relative to the readhead 300.

In the embodiment shown in FIGURE 3, the phase mask element 361 of the integrated readhead 300 also includes regions that provide no spatial filtering over the ends of certain ones of the outer optical fibers 330, to provide a plurality of fiber optic reference mark signal receiver channels that are used for providing reference signals arising from the mirror-like reference mark portion(s) in the reference mark zone 351. In various embodiments, when the reference mark zone 351 is located in the illumination spot 353, the mirror-like reference mark portion(s) produces a zero-order reflection that provides a diverging scale light 354, as shown in FIGURE 3. As a result, when the readhead 300 is displaced over the reference mark zone 351, the amount of "averaged" fringe light and the amount of zero-order reflected light that is received and transmitted as a reference signal by the ends of certain outer optical fibers 330 that have no spatial filtering and that provide a plurality of fiber optic reference mark signal receiver channels, will be modulated as a function of the amount of overlap of the illumination spot 353 and the reference mark zone 351. The plurality of respective fiber optic reference mark signal receiver channels are used to receive and transmit such modulated optical reference signals, such that a reference position can be precisely determined, as described in greater detail below.

It should be appreciated that it is desirable for the integrated readhead 300 to continue to output the periodic optical signals having different spatial phases that are used for incremental displacement measurement (e.g., the incremental measurement quadrature signals), simultaneously with outputting the reference mark optical signals when illumination spot 353 of the integrated 300 overlaps the reference mark zone 351. Therefore, in various exemplary embodiments, it is advantageous to make the area of the mirror-like reference mark portion(s) that is included in the reference mark zone 351 as small possible, while also satisfying other reference mark design considerations, as described in greater detail below.

FIGURE 4 is an isometric view of a fourth embodiment of a miniature fiber optic readhead and scale arrangement 3000' that includes a reference signal generating configuration according to this invention. The operation of the miniature fiber optic readhead and scale arrangement 3000' is in many respects similar to that of miniature fiber optic readhead and scale arrangement 3000 of FIGURE 3, and similarly numbered components may be similar or identical in form and operation, except as otherwise indicated below. Generally, only the significant differences between the operation of the miniature fiber optic readhead and scale arrangements 3000' and 3000 are described below.

As shown in FIGURE 4, the miniature fiber optic readhead and scale arrangement 3000' includes the integrated readhead 300 and a scale member 81, which has a single scale track that includes a scale grating 80 and a reference mark zone 451 and a reference mark boundary zone 451' located in an end region 89. The reference mark boundary zone 451' may include a track portion that is a grating portion (e.g., identical to the scale grating 80, in various embodiments) to provide a first boundary for the reference mark zone 451. The scale grating 80 may be a phase grating configured to suppress zero-order reflection, and provides a second boundary of the reference mark zone 451. It will be appreciated the boundary between the reference mark zone 451 and the scale grating 80 may approximately correspond to the end of the incremental displacement measuring range that is provided by the readhead and scale arrangement 3000'. Outside of zones 451 and 451' the end region 89 may generally comprise a mirror-like region.

The reference mark zone 451 may include a mirror-like reference mark portion and because it is bounded along the measuring axis direction by the scale grating 80 and the grating portion of the reference mark boundary zone 451', it may be substantially similar in structure and operation to the reference mark zone 351 previously described with reference to the readhead and scale arrangement 3000. One advantage of the readhead and scale arrangement 3000' over the readhead and scale arrangement 3000 is that the reference mark zone 451 is not located within the normal incremental displacement measuring range, where it might disturb the accuracy of the normal incremental displacement measurements to some extent.

In one embodiment, the reference mark boundary zone 451', being bounded by the mirror portion of the reference mark zone 451 and the mirror region of the end portion 89, may be substantially similar or identical in structure to the reference mark zone 251' previously described with reference to the readhead and scale arrangement 2000. In such an embodiment, the reference mark boundary zone 451' may be used to provide a secondary reference mark signal. In particular, the integrated readhead 300 generally receives a significant amount of zero order reflected light from the mirror-like end region 89 and reference mark portion(s) in the reference mark zone 451. However, when the illumination spot 353 overlaps the grating portion in the reference mark boundary zone 451' the zero order reflection is suppressed and a significant portion of the reflected light is diffracted away from the integrated readhead 300 as +/- first and third order diffracted light, according to previously described principles. As a result, the amount of light that is received and transmitted as a reference signal by the ends of certain outer optical fibers 330 that have no spatially filtering, will be modulated as a function of the amount of overlap of the illumination spot 353 and the reference mark boundary zone 451'. When the grating portion in the reference mark boundary zone 451' has an operational length LETOE, determined according to principles described further below, a secondary reference mark location can be precisely determined, if desired.

In various embodiments, the signals from the reference mark zone 451 may be used to determine the a reference mark location along the scale member 81, and to signal the end of the incremental displacement measuring range of the readhead and scale arrangement 3000'. In some embodiments, signals from the reference mark boundary zone 451' may be used to initiate a routine or circuit which acts as a "limit switch" for relative displacement of readhead and scale arrangement 3000', and/or that prepares a circuit to detect the location of the reference mark indicated by the reference mark zone 451 when an appropriate direction of relative displacement is provided.

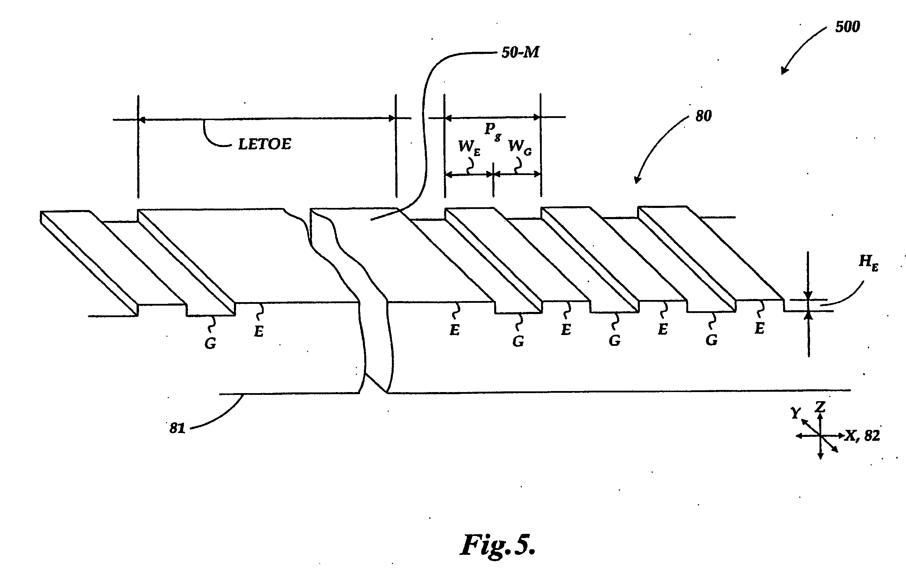

FIGURE 5 is an isometric view showing one exemplary embodiment of a grating and reference mark structure 500 according to this invention. Components numbered similarly to those shown in FIGURES 1-4 may be similar or identical. The grating and reference mark structure 500 comprises a scale grating 80 and a mirror portion reference mark 50-M located on a scale member 81. The mirror portion reference mark 50-M is illustrated as a generic example. As shown in FIGURE 5, the scale grating 80 includes grating elements E extending along the direction of the Y-axis, that are separated by recessed elements G. Grating elements E are arranged periodically along the measuring axis 82, according to a grating pitch Pg. Each of the grating elements E has a width $W_E$ along the direction of the measuring axis 82, while each of the recessed elements G has a width $W_G$. The grating elements E also have a recess height HE along the direction of the Z-axis. The particular embodiment of the scale grating 80 shown in FIGURE 5 is designed to suppress zero order reflected light and all even diffraction orders. Methods for accomplishing this are described in the incorporated '696 patent, and are otherwise known in the art. Briefly, in one exemplary embodiment, the scale grating 80 may be formed as a reflective phase grating with a reflective chrome coating on both the rectangular grating elements E and the recessed elements G, and with a recess height HE between the grating elements that causes destructive interference of the zero order reflected light, for example a height of ¼ of the wavelength of the source light used with the grating and reference mark structure 500. A 50% duty cycle, that is, $W_E$ approximately equal to $W_G$, contributes to the best suppression of the $0^{th}$ order reflected light and also suppresses the rest of the even diffraction orders.

A mirror portion reference mark 50-M, having a length LETOE along the x-axis direction, may be located within the scale grating 80. Of course the scale grating 80 should remain in phase on each side of the mirror portion reference mark 50-M. In various exemplary embodiments, the mirror portion reference mark 50-M is sized and located such that its boundaries are in phase with similar boundaries of the grating elements E. In some embodiments, the length LETOE may coincide with (N+1/2) periods of the scale grating 80, where N is an integer. In some embodiments, N may be chosen in the range of 10 to 30 periods of the scale grating 80. However, this range is exemplary only, and not limiting. Considerations related to selecting a desirable length LETOE are described in greater detail below. It will be appreciated that the mirror portion reference mark 50-M is illustrated as being formed to correspond to the plane of the grating elements E, but it could alternatively be formed to correspond to the plane of the grating elements G. It should be appreciated that, in various embodiments, the mirror portion reference mark 50-M may be fabricated using a subset of the same steps used to fabricate the scale grating 80. Thus, the embodiment of the reference mark 50-M shown in FIGURE 5 provides a particularly economical way of providing a reference mark that can be used in a miniature fiber optic readhead and scale arrangement that includes a phase-type scale grating 80 and an interferometric-type miniature fiber optic readhead. As illustrated in FIGURE 5, the grating and reference mark structure 500 is particularly suitable for use in the scale track 88 of the readhead and scale arrangement 1000 shown in FIGURE 1, where the mirror portion reference mark 50-M would be located in the reference mark zone 251, and in the readhead and scale arrangements 3000 and 3000' shown in FIGURES 3 and 4, where the mirror portion reference mark 50-M would be located in the reference mark zones 351 and 451, respectively.

It will be appreciated the roles of the grating and mirror features shown in FIGURE 5 and described above can be reversed to provide a grating portion reference mark, having a length LETOE, embedded in a mirror scale track portion extending along the x-axis direction, and/or in a mirror region such as that included in the end region 89 shown in FIGURE 4. It should be appreciated that such a grating portion reference mark, and an associated mirror scale track portion or mirror region, may be fabricated using the same steps that are used to fabricate an incremental measurement scale grating along an incremental measuring scale track on a scale member 81, thus providing a particularly economical way of providing a grating-type reference mark portion that can be used in a miniature fiber optic readhead and scale arrangement that includes a phase-type incremental measurement scale grating and an interferometric-type miniature fiber optic readhead. Such a structure including a grating-type reference mark portion would be particularly suitable for use in the scale track 88' of the readhead and scale arrangement 2000 shown in FIGURE 2, where the grating-type reference mark portion would be located in the reference mark zone 251', and in the readhead and scale arrangements 3000' shown in FIGURE 4, where grating-type reference mark portion would be located in the reference mark zone 451'.

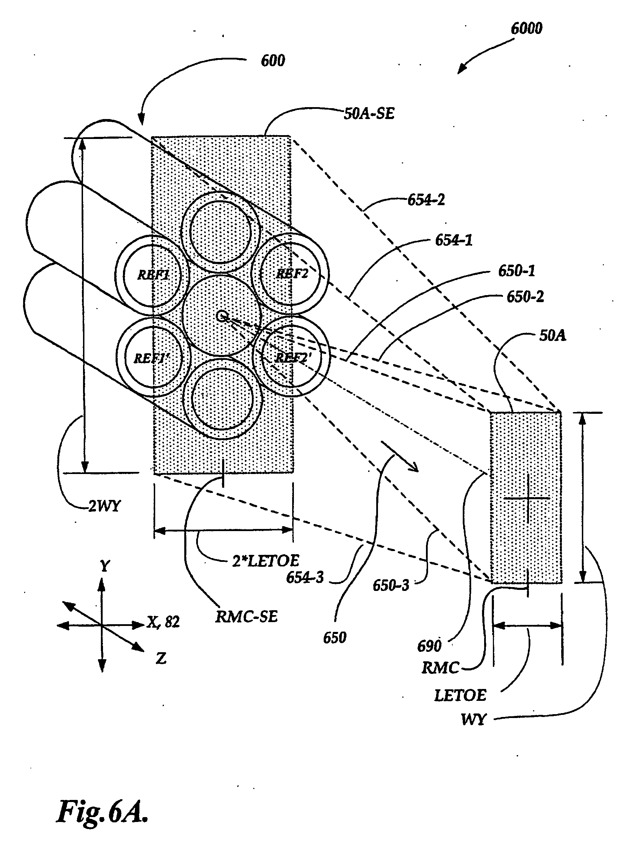

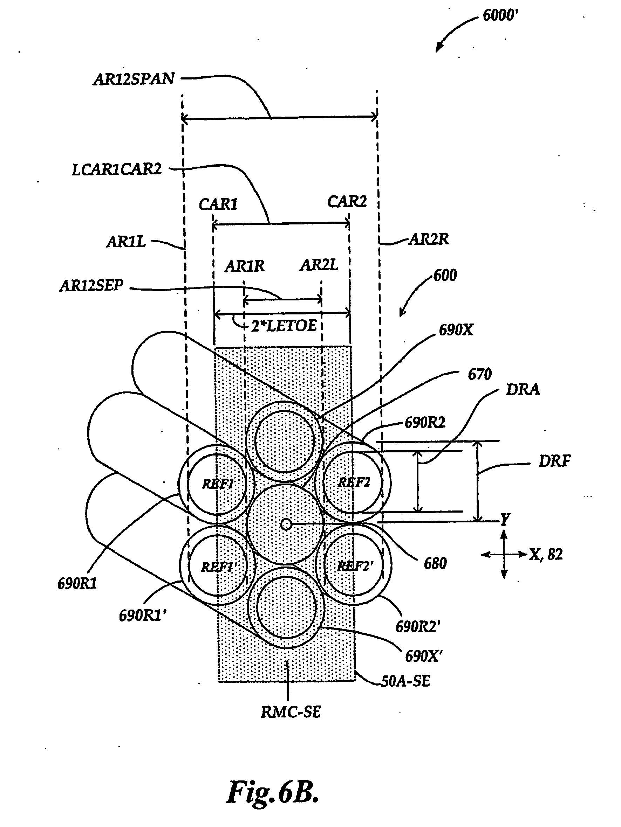

FIGURES 6A and 6B are isometric views schematically showing various aspects of a first embodiment of a reference signal generating configuration 6000 according to this invention, in relation to an illustrated dimension relationship. As illustrated in FIGURE 6A, the reference signal generating configuration 6000 comprises a reference mark readhead optical fiber arrangement 600 operably positioned relative to a generic reference mark 50A, which may comprise either a mirror reference mark portion or a grating reference mark portion (e.g., on a scale member 81, not shown), depending on whichever is appropriate in a particular readhead and scale arrangement, as previously described. The reference mark 50A has a dimension LETOE along the x-axis or measuring axis direction, a dimension WY along the y-axis direction and a center line RMC along the x-axis direction. Briefly, in operation, the reference mark readhead optical fiber arrangement 600 outputs a diverging source light 650 from a central fiber, which illuminates the reference mark 50A, as illustrated by exemplary source light rays 650-1, 650-2, and 650-3. In various embodiments, the source light 650 is advantageously monochromatic and spatially coherent, and may be temporally coherent in some embodiments. If the reference mark 50A is a mirror reference mark portion surrounded by a grating track portion and/or scale track, then it will strongly reflect zero-order light back to the reference mark readhead optical fiber arrangement 600, as illustrated by the exemplary scale light rays 654-1, 654-2 and 654-3, which correspond to the source light rays 650-1, 650-2, and 650-3, respectively. In such a case, the reference mark signal effect region 50A-SE corresponding to a mirror reference mark portion will be a region of "signal increase", to the extent that it overlaps any fiber optic reference mark signal receiver channel aperture provided by the reference mark readhead optical fiber arrangement 600.

As shown in FIGURE 6A, the reflected zero order scale light produces a reference mark signal effect region 50A-SE proximate to the optical signal receiver apertures provided by the ends of the optical fiber arrangement 600. The reference mark signal effect region 50A-SE has "magnified" dimensions that are twice those of the reference mark 50A, due to the divergence of the reflected scale light. In general, due to the use of diverging source light, all reference mark signal effect regions described herein will have dimensions that are twice those of their corresponding reference marks. The reference mark signal effect region 50A-SE has a center line RMC-SE along the along the x-axis direction. It will be appreciated that despite the size difference between the reference mark 50A and the reference mark signal effect region 50A-SE, their centerlines RMC and RMC-SE may be aligned along the measuring axis 82, and may displace at the same rate.

The previous description of operation has assumed that the reference mark 50A is a mirror reference mark portion (e.g., as shown in FIGURES 1 and 3). If the reference mark 50A is a grating reference mark portion surrounded by a mirror region or track portion (e.g., as shown in FIGURE 2), then the exemplary source light rays 650-1, 650-2, and 650-3 and the corresponding reflected exemplary scale light rays 654-1, 654-2 and 654-3 may be interpreted as zero-order light rays that are ordinarily provided by the surrounding mirror region or track portion (e.g., the mirror portion of the scale track 88'), but that are disrupted by the zero-order reflection suppression and higher order diffraction properties of the grating portion reference mark 50A. In such a case, the corresponding reference mark signal effect region 50A-SE will be a region of "signal decrease", to the extent that it overlaps any fiber optic reference mark signal receiver channel aperture provided by the reference mark readhead optical fiber arrangement 600. It should be appreciated that a grating portion reference mark is not limited to having grating bars aligned and spaced identically to the scale grating 80. More generally, any grating portion reference mark that diffracts a significant amount of source light away from the reference mark readhead optical fiber arrangement 600 and/or significantly suppresses zero order reflection may be used (e.g., two-dimensional gratings, etc.)

FIGURE 6B shows a portion 6000' of the reference signal generating configuration 6000 shown in FIGURE 6A, including the reference mark readhead optical fiber arrangement 600 and the reference mark signal effect region 50A-SE. As shown in FIGURE 6B, the reference mark readhead optical fiber arrangement 600 may comprise receiving fibers 690R1, 690R1', 690R2, and 690R2', having ends that provide reference mark signal receiver channel apertures that receive and provide the optical reference mark signals REF1, REF 1', REF2 and REF2', as shown. The other two fibers 690X and 690X' may be optional dummy fibers, used to facilitate a close-packing assembly technique, if desired. Alternatively, in some embodiments, they may provide receiver apertures that are used to receive optical signals that may be useful for monitoring optical signal power variations, contamination effects, or other anomalies, or to provide additional light sources. The receiving fibers 690R1, 690R1', 690R2, and 690R2' may be multi-mode fibers having an outer diameter DRF and a light carrying core area having a diameter DRA that may coincide with and/or provide a reference mark signal receiver channel aperture in some embodiments. A central source fiber 670 provides a light source 680, which generally emits a diverging source light, and may be provided by the end of a single-mode core of the source fiber 670, in some embodiments.

In various embodiments, it may be advantageous to configure a readhead optical fiber arrangement such that all optical fibers located within a fiber optic readhead are located within a cylindrical volume having a diameter of at most 1.5 millimeters, or 1.0 millimeters, or less. In one exemplary embodiment of the reference mark readhead optical fiber arrangement 600, the light carrying core diameter DRA may be approximately 200 microns, which may also be the reference mark signal receiver channel aperture diameter, the outer diameters DRF may be approximately 250 microns, and the central fiber 670 may have the same outer diameter DRF and a single-mode core diameter of approximately 4-10 microns. Accordingly, in such an embodiment, the reference mark readhead optical fiber arrangement 600 may have an overall diameter on the order of 750 microns. However, it will be appreciated that in other embodiments, larger or smaller fibers and/or other fiber spacings may be used.

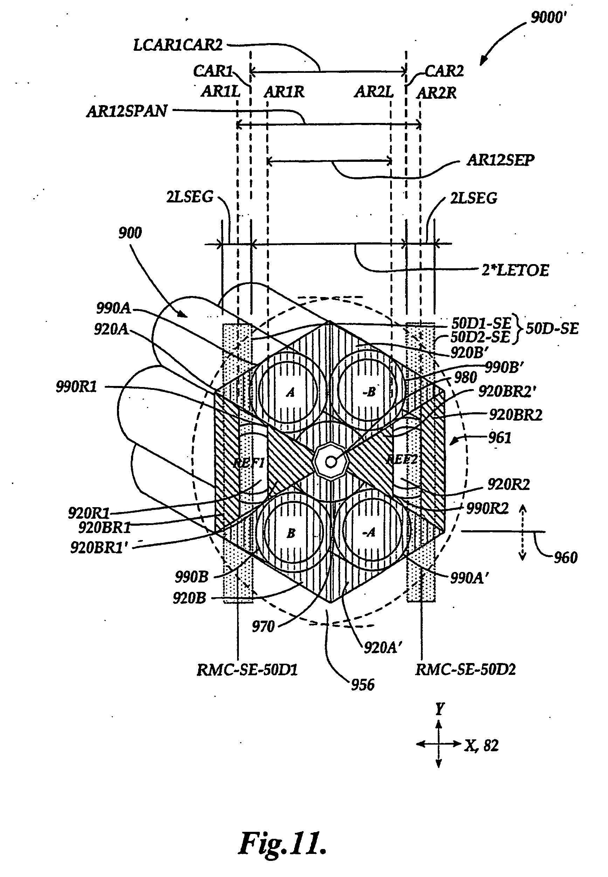

In FIGURE 6B, dashed lines AR1L, AR1R, and CAR1 show the positions of the left and right boundaries and center location, respectively, of the reference mark signal receiver channel apertures corresponding to the signals REF1 and REF1', along the x-axis direction. Dashed lines AR2L, AR2R, and CAR2 show the positions of the left and right boundaries and center location, respectively, of the reference mark signal receiver channel apertures corresponding to the signals REF2 and REF2' along the x-axis direction. The dimension LCAR1CAR2 denotes the distance along the x-axis between the effective centers of the reference mark signal receiver channel apertures corresponding to signals REF and REF1' and the centers of the reference mark signal receiver channel apertures corresponding to signals REF2 and REF2'. The dimension AR12SEP denotes the separation distance between the boundaries AR1R and AR2L. More generally, as used here and in reference to FIGURES 10 and 11, the dimension AR12SEP denotes the distance along the measuring axis direction between the interior boundaries of two reference mark signal receiver channel apertures that are included in an optical fiber arrangement, that is, between their boundaries that are closest to one another along the measuring axis direction. The dimension AR12SPAN denotes the total distance spanned between the boundaries AR1L and AR2R. More generally, as used here and in reference to FIGURES 10 and 11, the dimension AR12SPAN denotes the distance spanned along the measuring axis direction between the exterior boundaries of two reference mark signal receiver channel apertures that are included in an optical fiber arrangement, that is, between their boundaries that are farthest from one another along the measuring axis direction.

For the reference signal generating configuration 6000, the most general guidelines are that the reference mark readhead optical fiber arrangement 600 and the reference mark 50A should be configured such that such that the following relationship is fulfilled

$$AR12SEP < (2*LETOE) < AR12SPAN \qquad (Eq.\ 1)$$

and such that the resulting reference mark signals are usable to define a reference position with a desired accuracy and/or repeatability within a signal crossing region proximate to the reference mark 50A, as described in greater detail below. In various embodiments, a configuration that furthermore fulfills the relationships

$$(2*LETOE) > [AR12SEP+(0.25*(AR12SPAN-AR12SEP))]$$
$$(2*LETOE) < [AR12SEP+(0.75*(AR12SPAN-AR12SEP))]$$

(Eqs. 2&3)

may be advantageous (e.g., by providing a more robust and/or reliable relationship between the reference mark signals). In various other embodiments, a configuration that furthermore fulfills the relationships

$$(2*LETOE) > [AR12SEP+(0.4*(AR12SPAN-AR12SEP))]$$
$$(2*LETOE) < [AR12SEP+(0.6*(AR12SPAN-AR12SEP))]$$

(Eqs. 4&5)

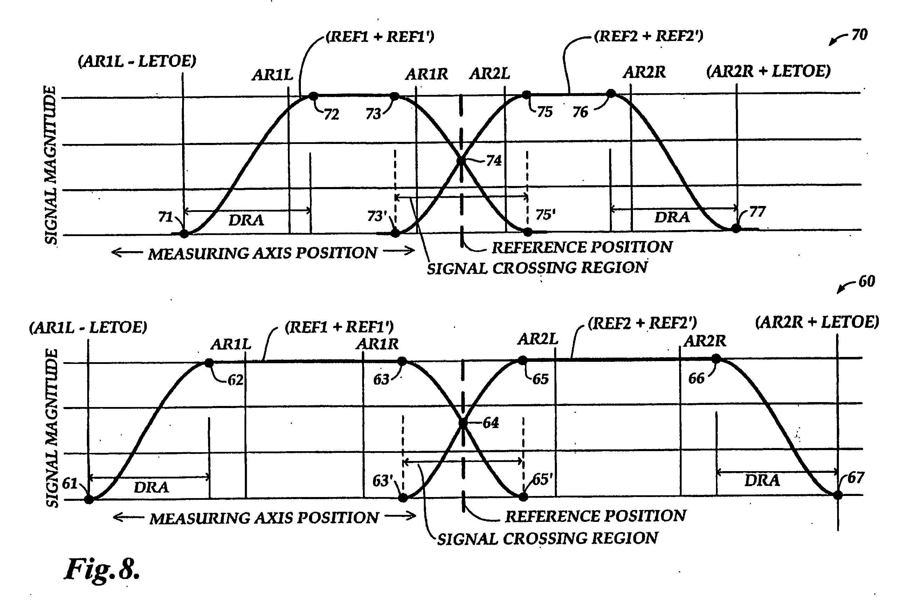

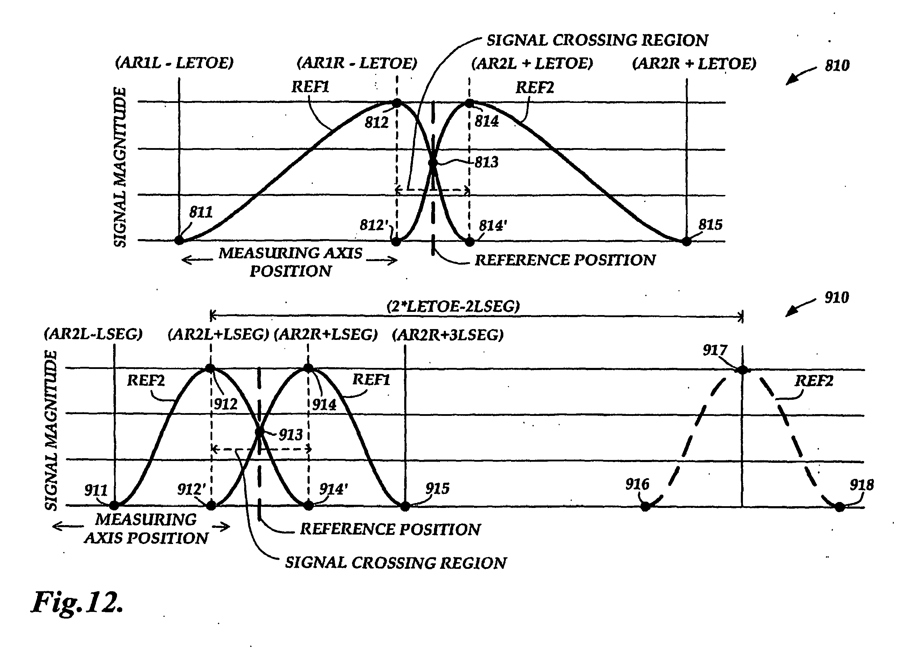

may be more advantageous. In some embodiments, it may be most advantageous if the dimension 2*LETOE is approximately equal to [AR12SEP + (0.5*(AR12SPAN-AR12SEP))], or approximately equal to the effective center to center distance LCAR1CAR2 between the reference mark signal receiver channel apertures corresponding to signals REF1 and REF2, to provide reference mark signals approximately as described below with reference to FIGURES 8 and 12.

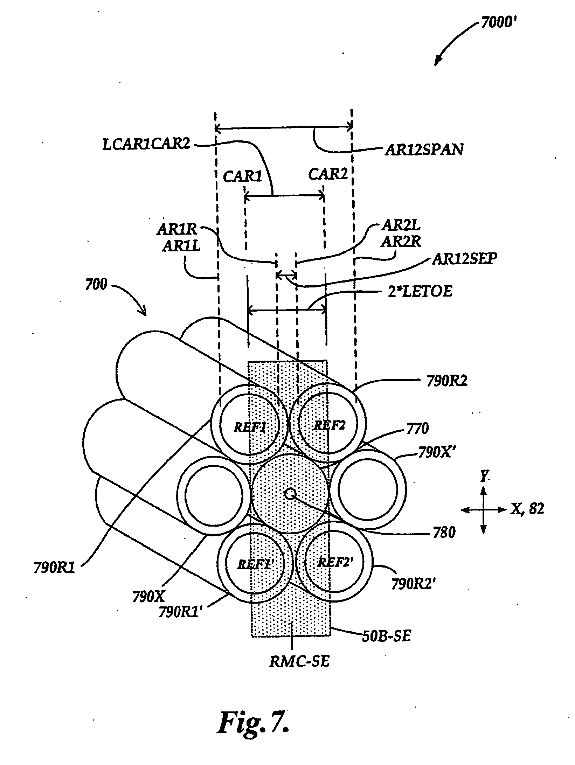

FIGURE 7 is an isometric view of a portion 7000' of a second embodiment of a reference signal generating configuration according to this invention. The design and operation of the portion 7000' is in many respects similar to that of the portion 6000' of FIGURE 6B, and similarly numbered elements in the 6XX and 7XX series of numbers (e.g., the elements 690R2 and 790R2) may be similar or identical in form and operation, except as otherwise indicated below. Generally, the design and operation of the portion 7000' may be understood based on the previous description of the portion 6000' and the reference signal generating configuration 6000. Therefore, only the significant differences between the operation of the portions 6000' and 7000' are described below.

The primary difference between the reference mark readhead optical fiber arrangements 700 and 600 is that the optical fiber arrangement 700 has a different rotational orientation in the XY plane, allowing the ends of fibers which are adjacent to one another along the x-axis direction to provide the reference mark signal receiver channel apertures that receive and provide the optical signals REF1, REF 1', REF2 and REF2' (corresponding to the fibers 790R1, 790R1', 790R2, and 790R2', respectively). A reference signal generating configuration corresponding to the portion 7000' may generally be configured according to the dimensional considerations and signal considerations outlined above with reference to EQUATIONS 1-5. In some embodiments, it may be most advantageous if the dimension 2*LETOE is approximately equal to [AR12SEP + (0.5*(AR12SPAN-AR12SEP))], or approximately equal to the effective center to center distance LCAR1CAR2 between the reference mark signal receiver channel apertures corresponding to signals REF1 and REF2, to provide reference mark signals approximately as described below with reference to FIGURE 8. It may be noted that since the dimension LCAR1CAR2 is less for the optical fiber arrangement 700 than for the optical fiber arrangement 600, the dimension 2*LETOE of the reference mark signal effect region 50B-SE and corresponding dimension LETOE of the corresponding reference mark (hereby designated as a reference mark 50B, not shown) are selected to be less than for the reference signal generating configuration corresponding to the portion 7000'.

As illustrated in FIGURES 6A, 6B and 7, either the reference signal generating configuration 6000, or a reference signal generating configuration corresponding to the portion 7000', is suitable for use in the readhead 200 and scale track 88 of the readhead and scale arrangement 1000 shown in FIGURE 1, where a mirror portion reference mark would be located in the reference mark zone 251. Either configuration is also suitable for use in the readhead 200 and scale track 88' of the readhead the readhead and scale arrangement 2000 shown in FIGURE 2, where a grating portion reference mark would be located in the reference mark zone 251'.

FIGURE 8 is a diagram showing two schematic signal charts 60 and 70, which respectively correspond to the reference signal generating configuration 6000 of FIGURES 6A and 6B, and a reference signal generating configuration corresponding to the portion 7000' shown in FIGURE 7. The signal chart 60, corresponding to the reference signal generating configuration 6000 of FIGURES 6A and 6B, shows two reference signals, a combined signal (REF1+REF1') and a combined signal (REF2+REF2), as a function of relative position along the measuring axis 82 between the reference mark signal effect region 50A-SE (or the reference mark 50A), and the reference mark readhead optical fiber arrangement 600. In particular, the point 61 corresponds to a position where the center line RMC of the reference mark 50A coincides with a position displaced by the length LETOE to the left of the position AR1L shown in FIGURE 6B. Accordingly, the reference mark signal effect region 50A-SE does not overlap any reference mark signal receiver channel apertures and no significant signal is produced at the point 61. As the reference mark 50A is displaced to the right, the reference mark signal effect region 50A-SE increasingly overlaps the REF1 and REF1' reference mark signal receiver channel apertures until a maximum is reached at a point 62, after a displacement equal to the reference mark signal receiver channel aperture diameter (e.g., the light carrying core diameter DRA). As the reference mark 50A continues to displace to the right, no further signal change is observed until the points 63 and 63', which mark the left limit of a signal crossing region where the (REF1+REF1') signal and the (REF2+REF2') signal converge (or diverge) to (or from) a common value. In the signal crossing region, as the center line RMC of the reference mark 50A is displaced to the right of the position (AR1L+LETOE), the signal (REF1+REF1') begins to decrease as the overlap between the reference mark signal effect region 50A-SE and the REF1 and REF1' reference mark signal receiver channel apertures decreases. Because the reference mark signal receiver channel apertures have similar dimensions and the length LETOE of the reference mark 50A is selected such that the dimension 2*LETOE of the reference mark signal effect region 50A-SE is approximately equivalent to the dimension LCAR1CAR2 shown in shown in FIGURE 6B, the signal (REF2+REF2') simultaneously begins to increase at the point 63', as the overlap between the reference mark signal effect region 50A-SE and the REF2 and REF2' reference mark signal receiver channel apertures increases. At a point 64, the center line RMC of the reference mark 50A is symmetrically located between the REF1/REF1' reference mark signal receiver channel apertures and the REF2/REF2' reference mark signal receiver channel apertures (at the position shown in FIGURE 6B) and the signals (REF1+REF1') and (REF2+REF2') are therefore nominally equal. The behavior of the signals (REF1+REF1') and (REF2+REF2') at the remaining points 65, 65', 66 and 67 may be understood by analogy with the previous explanation. The points 65 and 65', analogous to the points 63 and 63', mark the right limit of the signal crossing region.

The signal chart 70, corresponding to a reference signal generating configuration that includes and corresponds to the portion 7000' shown in FIGURE 7, is analogous to the signal chart 60, described above. That is, the point 71 is analogous to the point 61, and so on. Thus, the behavior of the signals (REF1+REF1') and (REF2+REF2') at the points 71-77 may be understood by analogy with the previous explanation, in combination with the description of FIGURE 7. In particular, in the signal crossing region, as the center line RMC of the reference mark 50B is displaced to the right of the position (AR1L+LETOE), at the point 73 the signal (REF1+REF1') begins to decrease as the overlap between the reference mark signal effect region 50B-SE and the REF1 and REF1' reference mark signal receiver channel apertures decreases. Because the reference mark signal receiver channel apertures have similar dimensions and the length LETOE of the reference mark 50B is selected such that the dimension 2*LETOE of the reference mark signal effect region 50B-SE is approximately equivalent to the dimension LCAR1CAR2 shown in shown in FIGURE 7, the signal (REF2+REF2') simultaneously begins to increase at the point 73', as the overlap between the reference mark signal effect region 50b-SE and the REF2 and REF2' reference mark signal receiver channel apertures increases. At a point 74, the center line RMC of the reference mark 50B is symmetrically located between the REF1/REF1' reference mark signal receiver channel apertures and the REF2/REF2' reference mark signal receiver channel apertures (at the position shown in FIGURE 7) and the signals (REF1+REF1') and (REF2+REF2') are therefore nominally equal. It will appreciated that the features of the signals (REF1+REF1') and (REF2+REF2') of the signal chart 70 are spaced more closely along the measuring axis than those of the signal chart 60, because the reference mark length LETOE is shorter in the reference signal generating configuration corresponding to the signal chart 70, and the center-to-center spacing between the REF1/REF1' reference mark signal receiver channel apertures and the REF2/REF2' reference mark signal receiver channel apertures is also less.

In various exemplary embodiments, in order to provide a reference position along the measuring axis 82 in a robust manner, a reference position detection circuit may identify the position where the individual signals (REF1+REF1') and (REF2+REF2') cross and are equal as the reference position. It will appreciated based on the above description that in various embodiments that use either a grating portion or a mirror portion as a reference mark, selecting the edge-to-edge length LETOE according to the dimensional considerations and signal considerations outlined above in relation to EQUATIONS 1-5 generally provides a reference signal generating configuration that provides reference mark signals that are adequate to define a reference position (e.g., where two respective reference signals have equal values) within a signal crossing region proximate to a reference mark. Fulfilling the relationships of EQUATIONS 2 and 3, or 4 and 5, may provide a particularly reliable and/or robust relationship between the reference mark signals in the signal crossing region. The reference signal generating configurations corresponding to the signal charts 60 and 70 each fulfill these relationships, and thereby insure a robust signal crossing region that includes signals that nominally cross at a signal value approximately halfway between their maximum and minimum values, as shown in FIGURE 8. It will be appreciated that the signal polarities shown in FIGURE 8 may generally correspond to those produce by a mirror portion reference mark surrounded by a grating region. All signals would generally be inverted for a grating portion reference mark surrounded by a mirror region. In practice, all the signals will generally include common mode DC offsets, which are not shown in FIGURE 8. In any case, reference signal generating configurations such as those disclosed above and further below, designed in accordance with the dimensional considerations and signal considerations outlined above with reference to EQUATIONS 1-5, can provide a plurality of respective reference mark signals that define a reference position that is repeatable to within less than one-half period of desirable spatially periodic incremental measurement signals within the signal crossing region proximate to a reference mark, such that the reference mark can reliably indicate a particular period or cycle of the incremental measuring signals and the associated particular wavelength along the scale. For example, repeatability within less than 4, or 2, microns is readily achieved, and submicron repeatability may be achieved, especially when the relationships of EQUATIONS 2 and 3, or 4 and 5, are fulfilled.

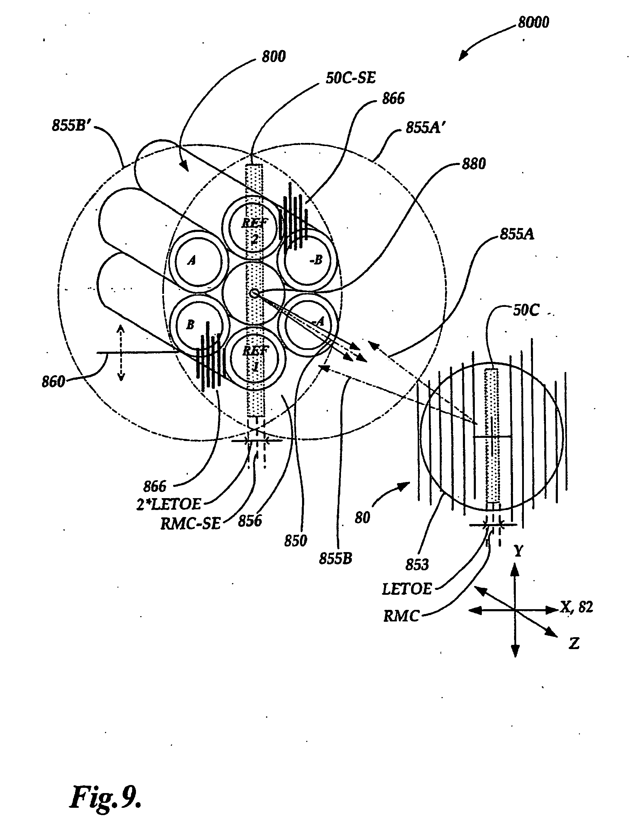

FIGURES 9 and 10 are isometric views schematically showing various aspects of the operation of an integrated reference signal and incremental signal generating configuration 8000 (also referred to as the integrated signal generating configuration 8000) according to this invention, including a third embodiment of a reference signal generating configuration according to this invention. The view shown in FIGURE 9 does not show a phase mask element 861, which is an essential element of the integrated signal generating configuration 8000, in order to more clearly illustrate other aspects of its operation. The phase mask element 861 is described below with reference to FIGURE 10.

FIGURE 9 shows certain elements of the integrated signal generating configuration 8000, including an integrated readhead optical fiber arrangement 800 (less the phase mask element 861, shown in FIGURE 10) operably positioned relative to a generic mirror portion reference mark 50C surrounded by the scale grating 80 (e.g. on a scale member 81, not shown). The reference mark 50C has a dimension LETOE along the x-axis direction, and a centerline RMC, as shown. Briefly, in operation, the integrated readhead optical fiber arrangement 800 outputs a diverging source light 850 from a light source 880 provided by a central fiber, which illuminates the reference mark 50C and the surrounding scale grating 80 at the illumination spot 853. In various embodiments, the source light 850 is advantageously monochromatic and spatially coherent, and may be temporally coherent in some embodiments. The scale grating 80 provides reflectively diffracted +/- first order scale light 855A and 855B, represented by its central rays in FIGURE 9. The +/- first-order scale lights 855A and 855B illuminate regions 855A' and 855B', respectively, which overlap in an interference zone 856 to form interference fringes 866 proximate to a receiver plane 860 of the integrated readhead optical fiber arrangement 800. The interference fringes are spatially filtered by the phase mask element 861 (shown in FIGURE 10) over the ends of the optical fibers that receive the optical quadrature signals A, A-, B and B-, according to previously described principles, and as described in greater detail below with reference to FIGURE 10.

Simultaneously with the quadrature signal generating operation outlined above, when the mirror portion reference mark 50C falls within the illumination spot 853, it reflects the diverging coherent source light 850 to provide the reference mark signal effect region 50C-SE, which has dimensions that are twice those of the mirror portion reference mark 50C and a centerline RMC-SE that is aligned with the centerline RMC, according to principles previously outlined with reference to FIGURE 6A. Additional details regarding the operation of the integrated reference signal and incremental signal generating configuration 8000 are described below with reference to FIGURE 10.

FIGURE 10 shows a portion 8000' of the integrated signal generating configuration 8000 shown in FIGURE 9, including the integrated readhead optical fiber arrangement 800, the reference mark signal effect region 50C-SE, and a phase mask element 861. In order to more clearly illustrate the phase mask element 861, FIGURE 10 does not show the interference fringes 866 in the interference zone 856, but it should be understood that such fringes are present during operation, as previously described. As shown in FIGURE 10, the integrated readhead optical fiber arrangement 800 may comprise a central source fiber 870 that provides the light source 880, which may be provided by the end of a single-mode core of the source fiber 870 in some embodiments, and receiver fibers 890A, 890A', 890B, 890B' 890R1, and 890R2, that provide receiver channels that receive the optical signals A, -A, B, -B, REF1, and REF2, respectively, as shown. The integrated readhead optical fiber arrangement 800 also includes a phase mask element 861 comprising phase masks 820A, 820B, 820A', 820B', blocking masks 820BR1 and 820BR2, and open aperture masks 820R1 and 820R2. Dashed lines AR1L, AR1R and CAR1 show the positions of the left and right boundaries and effective center location, respectively, of the reference mark signal receiver channel aperture corresponding to the signal REF1, and dashed lines AR2L, AR2R and CAR2 show the positions of the left and right boundaries and effective center location, respectively, of the reference mark signal receiver channel aperture corresponding to the signal REF2. The dimension LCAR1CAR2 denotes the distance along the x-axis between the effective centers of the reference mark signal receiver channel apertures corresponding to signals REF1 and REF2. The dimension AR12SPAN denotes the total distance spanned between the boundaries AR1L and AR2R. As previously outlined with reference to FIGURE 6B, generally herein the dimension AR12SEP denotes the distance along the measuring axis direction between the interior boundaries of two reference mark signal receiver channel apertures that are included in an optical fiber arrangement, that is, between their boundaries that are closest to one another along the measuring axis direction. For the portion 8000', the dimension AR12SEP is between the boundaries AR1R and AR2L and is zero, so it is not labeled in FIGURE 10, in order to avoid confusion. It will appreciated based on the above description that in various embodiments of the integrated signal generating configuration 8000 that may use either a grating portion or a mirror portion as a reference mark, that selecting the edge-to-edge length LETOE according to the dimensional considerations and signal considerations outlined above in relation to EQUATIONS 1-5 generally provides a robust reference signal generating configuration, especially when the relationships of EQUATIONS 2 and 3, or 4 and 5, are fulfilled.

It will be appreciated that whereas the light receiving area of previously described reference mark signal receiver channel apertures has been defined solely by the light carrying core area at the end of their respective reference mark signal receiver channel optical fibers, in the integrated readhead optical fiber arrangement 800 the light receiving area of the reference mark signal receiver channel apertures 890R1 and 890R2 is defined partially by the boundary of the light carrying core area at the end of their respective receiver channel optical fibers and partially by their respective blocking/open aperture masks 820BR1/820R1 and 820BR2/820R2. Of course, in various other embodiments, analogous aperture masks could completely circumscribe and define the light receiving area of reference mark signal receiver channel apertures, if desired. The respective blocking/open aperture masks 820BR1/820R1 and 820BR2/820R2 include no structure that is spatially periodic along the measuring axis direction, so that any interference fringe light received by the reference mark signal receiver channel apertures 890R1 and 890R2 will not create a significant spatially periodic signal component that disturbs the desired reference mark signals.

Briefly, in operation, the phase masks 820A, 820B, 820A', and 820B' are located at the receiving plane 860, and spatially filter the interference fringes in the interference zone 856 to provide quadrature-type periodic incremental measurement signals A, A', B, and B', respectively. In one embodiment, the phase masks 820A, 820B, 820A', and 820B' have relative spatial phases of 0, 90, 180 and 270 degrees, respectively. It will be appreciated that the relative positions of the measurement signals A, A', B, and B', are illustrative only, and not limiting. In general, the phase masks may be configured to provide any desired arrangement for the measurement signals A, A', B, and B'. Various operation and design principles that are relevant to the phase mask element 861, as well as alternative spatial phase arrangements, are described in the incorporated references.

Blocking masks 820BR1 and 820BR2 and open aperture masks 820R1 and 820R2 are located at the receiving plane 860 to mask the ends of fibers 890R1 and 890R2 and provide reference signals REF1 and REF2. It will be appreciated that in the absence of the blocking masks 820BR1 and 820BR2 the ends of the receiver fibers 890R1 and 890R2, which are collocated along the direction of the measuring axis 82, would respond to various positions of the reference mark signal effect region 50C-SE with identical signals. In contrast, the arrangement of the masks 820BR1, 820BR2, 820R1 and 820R2 provides reference mark signal receiver channel apertures that are offset along the direction of the measuring axis 82, to provide reference signals REF1 and REF2 that exhibit a desirable signal crossing region, as described further below with reference to FIGURE 12.

Regarding the signals A, A', B, and B', as previously indicated, the fringes arising from the scale grating 80 are present continuously during the operation of the integrated signal generating configuration 8000, in order to continuously generate these quadrature signals, as outlined above. In general, the fringes may be weakened when the mirror portion reference mark 50C is present in the illumination spot 853, detracting from the amount of diffracted +/- first order scale light 855A and 855B. In addition, the phase masks 820A, 820B, 820A', and 820B' will admit a portion of the zero order reflected light included in the reference mark signal effect region 50C-SE, when it overlaps their locations. As a result, the amplitudes and offsets of the quadrature signals A, A', B, and B' will generally be affected by the reference mark 50C, which may detract from the resulting incremental displacement measurement accuracy. Therefore, in some embodiments, signal processing (e.g., adaptive amplitude "gain control" and/or DC offset compensation and/or phase compensation, or the like) may be applied to the quadrature signals A, A', B, and B' to at least partially negate such effects, and/or the length LETOE and/or area of the reference mark 50C may be limited to limit its disruptive effects.

Regarding the reference signals REF1 and REF2, as previously indicated, the fringes arising from the scale grating 80 are present continuously during the operation of the integrated signal generating configuration 8000. However, the open aperture masks 820R1 and 820R2 provide no spatial filtering over the ends of receiver fibers 890R1, and 890R2, and the light from a plurality of fringes simply provides a relatively constant average amount of light to the reference signals REF1 and REF2, independent of displacement. In contrast, when the reference mark signal effect region 50C-SE overlaps the locations of the open aperture masks 820R1 and 820R2, its zero order reflected light significantly increases the reference signals REF1 and REF2, as a function of the amount of overlap.

In various embodiments, it may be advantageous to configure a readhead optical fiber arrangement such that all optical fibers located within a fiber optic readhead are located within a cylindrical volume having a diameter of at most 1.5 millimeters, or 1.0 millimeters, or less. In one specific embodiment, the fibers 890 may have light carrying core areas having diameters DRA of approximately 200 microns, outer diameters DRF of approximately 250 microns and the central fiber 870 may have the same outer diameter DRF, and a single-mode core diameter, or mode-field diameter, of approximately 4-10 microns. Accordingly, in such an embodiment, the reference mark readhead optical fiber arrangement 800 may have an overall diameter on the order of 750 microns. However, it will be appreciated that in other embodiments, larger or smaller fibers and/or other fiber spacings may be used.

The scale grating 80 may have a grating pitch $P_g$ of approximately 4 microns, and the fringes 866 may have a similar pitch. The reference mark signal receiver channel apertures defined by the reference mark signal receiver fiber ends and the blocking/open aperture masks 820BR1/820R1 and 820BR2820R2 may have a dimension on the order of 100 microns along the direction of the measuring axis 82. The reference mark 50C may have a length LETOE that is advantageously of approximately 38 microns in one embodiment, which provides a desirable tradeoff between adequate reference mark signal strength and minimal disturbance to the incremental measurement signals. However, it should be appreciated that the dimensional relationships outlined above for LETOE are exemplary only, and not limiting. In various applications, additional design considerations may favor smaller or larger dimensions for LETOE.

FIGURE 11 is an isometric view showing a portion 9000' of a second integrated signal generating configuration according to this invention, including a fourth embodiment of a reference signal generating configuration according to this invention. The design and operation of the portion 9000' is in many respects similar to that of the portion 8000' of FIGURE 10, and similarly numbered elements in the 8XX and 9XX series of numbers (e.g. the elements 820R2 and 920R2) may be similar or identical in form and operation, except as otherwise indicated below. Generally, the design and operation of the portion 9000' may be understood based on the previous description of the portion 8000' and the integrated signal generating configuration 8000. Therefore, only the significant differences between the operation of the portions 8000' and 9000' are described below.

FIGURE 11 shows the portion 9000' including the integrated readhead optical fiber arrangement 900, the reference mark signal effect region 50D-SE, and a phase mask element 961. The primary difference between the portions 8000' and 9000' is that the optical fiber arrangements 800 and 900 have a different rotational orientation in the XY plane. In the optical fiber arrangement 900, receiver fibers 990R1 and 990R2, which are separated along the x-axis direction, provide the reference signals REF1 and REF2. In addition, the reference mark signal effect region 50D-SE includes two signal effect sub-regions 50D1-SE and 50D2-SE, having individual dimensions 2LSEG, and providing an interior edge-to-edge dimension 2*LETOE. It will be appreciated that a corresponding mirror portion reference mark, hereby designated 50D, (not shown) including two mirror sub-portions or reference mark portions designated 50D1 and 50D2 having individual dimensions LSEG, and providing an interior edge-to-edge dimension LETOE, provides the two separated signal effect sub-regions or reference mark portions 50D1-SE and 50D2-SE according to previously outlined principles. Although in the particular embedment shown in FIGURE 11, the dimension 2*LETOE corresponds to the distance between the interior boundaries of the two signal effect sub-regions 50D1-SE and 50D2-SE, it should be appreciated that in an alternative embodiment, the relationship between the sub-regions 50D1-SE and 50D2-SE may be such that the distance between their exterior boundaries (rather than their interior boundaries) corresponds to the same dimension 2*LETOE. In either case, it should be appreciated that by structuring a reference mark to include two reference mark sub-portions that are separated, a total area of the reference mark is advantageously limited in comparison to a single portion reference mark of similar overall length and its disruptive effects on periodic incremental measurement signals are therefore advantageously limited. In some embodiments, to provide a desirable tradeoff between adequate reference mark signal strength and minimal disturbance to the incremental measurement signals, each of the two reference mark portions may have a dimension along the measuring axis direction which is at least 0.25*(AR12SPAN-AR12SEP) and at most 0.75*(AR12SPAN-AR12SEP). In various other embodiments, each of the two reference mark portions may have a dimension along the measuring axis direction which is at least 0.4*(AR12SPAN-AR12SEP) and at most 0.6*(AR12SPAN-AR12SEP).

In any of these embodiments, selecting the edge-to-edge length LETOE according to the dimensional considerations and signal considerations outlined above in relation to EQUATIONS 1-5 generally provides a robust reference signal generating configuration, especially when the relationships of EQUATIONS 2 and 3, or 4 and 5, are fulfilled. The reference signals REF1 and REF2 provided by the integrated signal generating configuration corresponding to the portion 9000' exhibit a desirable signal relationship in a signal crossing region, as described further below with reference to FIGURE 12.

As illustrated in FIGURES 9, 10 and 11, either the reference signal generating configuration 8000, or a reference signal generating configuration corresponding to the portion 9000', is suitable for use in the readhead 300 of the readhead the readhead and scale arrangements 3000 and 3000' shown in FIGURES 3 and 4.

FIGURE 12 is a diagram showing two schematic signal charts 810 and 910, which respectively correspond to the integrated signal generating configuration 8000 shown in of FIGURES 9 and 10, and an integrated signal generating configuration corresponding to the portion 9000' shown in FIGURE 11. The signal charts 810 and 910 do not have the same vertical or horizontal scaling and, in practice, all the signals will generally include common mode DC offsets, which are not shown in FIGURE 12.

The signal chart 810, corresponding to the reference signal generating configuration 8000 of FIGURES 9 and 10, shows two reference signals, a signal REF1 and a signal REF2 as a function of relative position along the measuring axis 82 between the reference mark signal effect region 50C-SE (or the reference mark 50C), and the reference mark readhead optical fiber arrangement 800. In particular, the point 811 corresponds to a position where the center line RMC-SE of the reference mark 50C coincides with a position displaced by the length LETOE of the reference mark 50C to the left of the position AR1L shown in FIGURE 10. Accordingly, the reference mark signal effect region 50C-SE does not overlap the REF1 reference mark signal receiver channel aperture, and no significant signal is produced at the point 811. As the reference mark 50C is displaced to the right, the reference mark signal effect region 50C-SE increasingly overlaps the REF1 reference mark signal receiver channel aperture until a maximum is reached at a point 812, at a position where the centerline RMC-SE is a distance LETOE to the left of the position AR1R shown in FIGURE 10. In the signal crossing region, as the reference mark 50C continues to displace to the right from the point 812, the signal REF1 begins to decrease as the overlap between the reference mark signal effect region 50C-SE and the REF1 reference mark signal receiver channel aperture decreases. The signal REF2 simultaneously begins to increase at the point 812', as the overlap between the reference mark signal effect region 50C-SE and the REF2 reference mark signal receiver channel aperture increases. At a point 813, the center line RMC-SE of the reference mark 50C is symmetrically located along the REF1 reference mark signal receiver channel aperture and the REF2 reference mark signal receiver channel aperture (at the position shown in FIGURE 10) and the signals REF1 and REF2 are therefore nominally equal. Because the reference mark signal receiver channel apertures have similar dimensions and the length LETOE of the reference mark 50C is selected such that the dimension 2*LETOE of the reference mark signal effect region 50C-SE is approximately equivalent to the dimension LCAR1CAR2 shown in shown in FIGURE 10, the signals REF1 and REF2 cross at a value that is approximately midway between their maximum and minimum values in the signal crossing region, which leaves a robust margin for individual signal variations that may arise from various causes. The behavior of the signals REF1 and REF2 at the remaining points 814, 814' and 815 may be understood by analogy with the previous explanation.

The signal chart 910 corresponds to a reference signal generating configuration that includes and corresponds to the portion 9000' shown in FIGURE 11. The signal chart 810 shows two reference signals, a signal REF1 and a signal REF2 as a function of relative position along the measuring axis 82 between the centerline RMC-SE-50D2 of the reference mark signal effect sub-region 50D2-SE and the optical fiber arrangement 900. It will be appreciated that the centerline RMC-SE-50D2 coincides with centerline of a corresponding reference mark sub-portion, hereby designated as sub-portion 50D2 of a two-portion reference mark 50D, which also includes a sub-portion designated 50D1. The point 911 corresponds to a position where the center line RMC-SE-50D2 coincides with a position displaced by the length LSEG to the left of the position AR2L shown in FIGURE 11. Accordingly, the reference mark signal effect region 50D2-SE does not overlap with the REF2 reference mark signal receiver channel aperture, and no significant signal is produced at the point 811. As the reference mark 50D is displaced to the right, the reference mark signal effect region 50D2-SE increasingly overlaps the REF2 reference mark signal receiver channel aperture until a maximum is reached at a point 912, where the centerline RMC-SE-50D2 is a distance LSEG to the left of the position AR2R shown in FIGURE 11. In the signal crossing region, as the reference mark 50D continues to displace to the right from the point 912, the signal REF2 begins to decrease as the overlap between the reference mark signal effect region 50D2-SE and the REF2 reference mark signal receiver channel aperture decreases and the signal REF1 simultaneously begins to increase at the point 912', as the overlap between the reference mark signal effect region 50D1-SE and the REF1 reference mark signal receiver channel aperture increases. At a point 913, the reference mark 50D is symmetrically located between the REF1 and REF2 reference mark signal receiver channel apertures (at the position shown in FIGURE 11) and the signals REF1 and REF2 are therefore nominally equal. Because the reference mark signal receiver channel apertures have similar dimensions and the length LETOE of the reference mark 50D is selected such that the dimension 2*LETOE of the reference mark signal effect region 50D-SE is approximately equivalent to the dimension LCAR1CAR2 shown in shown in FIGURE 11, the signals REF1 and REF2 cross at a value that is approximately midway between their maximum and minimum values in the signal crossing region, which leaves a robust margin for individual signal variations that may arise from various causes. The behavior of the signals REF1 and REF2 at the remaining points 914, 914' and 915 may be understood by analogy with the previous explanation.

The points 916-918 illustrate a secondary REF2 signal that is provided by the sub-region 50D1-SE overlapping the REF2 receiver, as the reference mark 50D continues to displace to the right. However, it will be appreciated that there is no complementary "crossing signal" provided by the REF1 reference mark signal receiver channel aperture corresponding to these points. An analogous REF1 signal, occurring for a displacement to the left of the illustrated signal region, is not shown. Since the reference position is established where the REF1 and REF2 signals are equal, in the signal crossing region, the secondary REF2 signal corresponding to the points 916-918 is irrelevant, as is the analogous secondary REF1 signal, except for their potential use as indicators that the reference position is approaching, or a confirmation that the reference position should have been detected and is receding, depending on the displacement direction.

While this invention has been described in conjunction with the exemplary embodiments outlined above, it is evident that the embodiments and design factors described above are indicative of additional alternative embodiments, modifications and variations, as will be apparent to those skilled in the art. As a first example, although the foregoing discussion describes embodiments that include mirror-type reference mark portions that include planar mirrors, more generally "significant zero order reflection" reference mark portions may be used in place of mirror reference mark portions. Such "significant zero order reflection" portions may comprise any arrangement of surfaces that provide a significant amount of zero order reflected light, and/or that disturb a significant amount of +/- first order diffracted light, such that the corresponding reference mark signal level can be distinguished from the signal level resulting from an adjacent "zero order reflection suppressing" portion (e.g., a portion of an incremental measurement scale grating or a grating track portion). For example, in various embodiments, a "significant zero order reflection" portion may comprise a phase grating with an 80-20 duty cycle (e.g. similar to the phase grating shown in FIGURE 5, but with $W_E=8*P_g$ and $W_G=.2*P_g$), or a 70-30 duty cycle, etc. In various other embodiments, the zero order reflection portion may comprise a 50-50 duty cycle phase grating, but with a grating bar height that does not suppress zero order reflection (e.g., similar to the phase grating shown in FIGURE 5, but with $H_E=.5*$illumination wavelength or $H_E=.1*$illumination wavelength, etc).

In other embodiments, one or more grating elements of a zero order reflection portion may be fabricated to have a different reflectance than other portions of the scale.

As a second example, it will be appreciated that in the embodiments shown in FIGURES 6A, 6B and 7, the individual reference signals REF1 and REF1' are redundant, and the individual reference signals REF2 and REF2' are redundant. Although certain advantages with regard to signal strength and/or alignment sensitivity may be gained from such redundancy, in other embodiments, the redundant signals may be eliminated and the associated optical fiber arrangements may consist of fewer optical fibers than those illustrated herein.

As a third example, although various embodiments of the invention have been illustrated using straight scale tracks, the same or similar embodiments may used with curvilinear or circular scale tracks. Thus, in various embodiments, the terms scale track and measuring axis direction, for example, may be interpreted as referring to a circular or curvilinear track or measuring axis, and the related illustrations may be interpreted as showing tangential portions of such circular or curvilinear tracks or measuring axes.

**Claims**

1. A fiber optic readhead and scale arrangement (1000, 2000, 3000, 3000') for measuring the relative displacement between two members along a measuring axis direction (82) and for providing a reference position indication, the fiber optic readhead and scale arrangement comprising:

at least a first fiber optic readhead (200), the first fiber optic readhead comprising a light source (680, 880, 980) that outputs a first diverging source light (250, 350, 650, 850), and at least first and second fiber optic reference mark signal receiver channels that are operable to provide respective reference mark signals ($REF_1$, $REF_1$', $REF_2$, $REF_2$'); and
a scale member (81) comprising at least a first scale track extending along a measuring axis direction, the first scale track comprising:

a first track portion (88, 88') comprising a grating that provides a first amount of zero order reflectance when illuminated by the diverging source light; and
at least one reference mark portion (251, 251', 351, 451, 50A, 50D1, 50D2) located within the first track portion, the at least one reference mark portion providing a second amount of zero order reflectance that is different from the first amount of zero order reflectance when illuminated by the diverging source light,

wherein:

the first fiber optic reference mark signal receiver channel comprises a first reference mark signal receiver channel optical fiber (690R1, 690R1', 790R1, 790R1', 890R1, 990R1) and a first reference mark signal receiver channel aperture, the second fiber optic reference mark signal receiver channel comprises a second reference mark signal receiver channel optical fiber (690R2, 690R2', 790R2, 790R2', 890R2, 990R2) and a second reference mark signal receiver channel aperture, and when the first fiber optic readhead is operably positioned relative to the first scale track the boundaries of the first and second reference mark signal receiver channel apertures that are closest to one another are separated by a dimension AR12SEP along the measuring axis direction, and the boundaries of the first and second reference mark signal receiver channel apertures that are farthest from one another span a total aperture span dimension AR12SPAN along the measuring axis direction; the at least one reference mark portion is configured such that two reference mark portion boundaries are separated by an edge-to-edge dimension LETOE along the measuring axis direction; the at least one reference mark portion and the first and second fiber optic reference mark signal receiver channels are configured such that AR12SEP < (2*LETOE) < AR12SPAN; and
the respective reference mark signals define a reference position within a signal crossing region proximate to the at least one reference mark portion.

2. The fiber optic readhead and scale arrangement of Claim 1, wherein the at least one reference mark portion and the first and second fiber optic reference mark signal receiver channels are configured such that [AR12SEP+(0.25*(AR12SPAN-AR12SEP))] < (2*LETOE) < [AR12SEP+(0.75*(AR12SPAN-AR12SEP))].

3. The fiber optic readhead and scale arrangement of Claim 2, wherein the at least one reference mark portion and the first and second fiber optic reference mark signal receiver channels are configured such that [AR12SEP+0.4*(AR12SPAN-AR12SEP)] < (2*LETOE) < [AR12SEP+0.6*(AR12SPAN-AR12SEP)].

4. The fiber optic readhead and scale arrangement of Claim 1, wherein the at least one reference mark portion consists of a single reference mark portion having outer boundaries that are separated by the edge-to-edge dimension LETOE .

5. The fiber optic readhead and scale arrangement of Claim 1, wherein the at least one reference mark portion comprises first and second reference mark sub-portions, configured according one of configuration A (50D1, 50D2) and configuration B, wherein, in configuration A the interior boundaries of the first and second reference mark sub-portions which are closest to one another are separated by the edge-to-edge dimension LETOE, and, in configuration B the exterior boundaries of the first and second reference mark sub-portions which are farthest from one another are separated by the edge-to-edge dimension LETOE.

6. The fiber optic readhead and scale arrangement of Claim 5, each of first and second reference mark sub-portions has a dimension along the measuring axis direction which is at least 0.25*(AR12SPAN-AR12SEP) and at most 0.75*(AR12SPAN-AR12SEP).

7. The fiber optic readhead and scale arrangement of Claim 6, each of first and second reference mark sub-portions has a dimension along the measuring axis direction which is at least 0.4*(AR12SPAN-AR12SEP) and at most 0.6*(AR12SPAN-AR12SEP).

8. The fiber optic readhead and scale arrangement of Claim 1, wherein the first diverging source light is spatially coherent and monochromatic, the first track portion is one of a phase grating portion configured to suppress zero-order reflection of the first diverging source light and a zero order reflection portion, and the at least one reference mark portion is the other of a phase grating portion configured to suppress zero-order reflection of the first diverging source light and a zero order reflection portion.

9. The fiber optic readhead and scale arrangement of Claim 8, wherein the zero order reflection portion is a mirror portion.

10. The fiber optic readhead and scale arrangement of Claim 1, wherein:

a light receiving area of each fiber optic reference mark signal receiver channel aperture is defined by at least one of a) a light carrying core area of a corresponding reference mark signal receiver channel optical fiber, and b) an aperture mask (820R1, 820BR1, 820R2, 820BR2, 920R1, 920BR1, 920BR1', 920R2, 920BR2, 920BR2') that includes no spatially periodic structure and that is located proximate to the end of the corresponding reference mark signal receiver channel optical fiber to cover a portion of the light carrying core area.

11. The fiber optic readhead and scale arrangement of Claim 1, wherein:

the first light source comprises the end of a source optical fiber;
the first and second reference mark signal receiver channel optical fibers are located parallel to and proximate to the source optical fiber; and
all optical fibers located within the first fiber optic readhead, including the source optical fiber and the first and second reference mark signal receiver channel optical fibers, are located within a cylindrical volume having a diameter of at most 1.5 millimeters.

12. The fiber optic readhead and scale arrangement of Claim 11, wherein the cylindrical volume has a diameter of at most 1.0 millimeter.

13. The fiber optic readhead and scale arrangement of Claim 1, further comprising:

a second scale track (86) arranged on the scale member proximate to the first scale track, the second scale track comprising a reflective periodic scale grating (80) extending along the measuring axis direction, and a second fiber optic readhead (100) arranged proximate to the first fiber optic readhead, the second fiber optic readhead comprising a second light source that outputs a second diverging source light comprising spatially coherent monochromatic light, and a plurality of respective fiber optic incremental measurement signal receiver channels that are operable to provide respective spatially periodic incremental measurement signals, each respective fiber optic incremental measurement signal receiver channel comprising a respective incremental measurement signal receiver channel optical fiber (130) and a respective incremental measurement signal receiver channel spatial phase mask portion (161) arranged proximate to an end of that optical fiber, the respective incremental measurement signal receiver channel spatial phase mask portion having a respective spatial phase and having light-blocking elements arranged at a pitch that is operable for spatially filtering a spatially periodic intensity pattern that arises at a nominal receiver plane (160) when the second diverging source light is received and reflected by the reflective periodic scale grating, wherein:

the fiber optic readhead and scale arrangement is configured such that the first and second fiber optic readheads are fixed relative to one another,
the respective reference mark signals define a reference position that is repeatable to within less than one-half period of the spatially periodic incremental measurement signals within the signal crossing region proximate to the at least one reference mark portion.

**14.** The fiber optic readhead and scale arrangement of Claim 13, wherein:

the first diverging source light is spatially coherent and monochromatic;
the first track portion is one of a phase grating portion configured to suppress zero-order reflection of the first diverging source light and a zero order reflection portion;
the at least one reference mark portion is the other of a phase grating portion configured to suppress zero-order reflection of the first diverging source light and a zero order reflection portion;
the reflective periodic scale grating of the second scale track is a phase grating configured to suppress zero-order reflection of the second diverging source light; and
the reflective periodic scale grating of the second scale track and the phase grating portion of the first scale track each have nominally the same recess height between their grating elements.

**15.** The fiber optic readhead and scale arrangement of Claim 1, wherein:

the first diverging source light is spatially coherent and monochromatic;
the first scale track comprises a reflective periodic scale grating (80) extending over a displacement measuring range along the measuring axis direction, the reflective periodic scale grating is a phase grating configured to suppress zero-order reflection of the first diverging source light;
the first track portion that provides the first amount of zero order reflectance is provided by a portion of the reflective periodic scale grating that is proximate to the at least one reference mark portion;
the at least one reference mark portion comprises a zero order reflection portion; and
the first fiber optic readhead further comprises a plurality of respective fiber optic incremental measurement signal receiver channels that are operable to provide respective spatially periodic incremental measurement signals (A, A-, B, B-), each respective fiber optic incremental measurement signal receiver channel comprising a respective incremental measurement signal receiver channel optical fiber (890A, 890A', 890B, 890B', 990A, 990A', 990B, 990B') and a respective incremental measurement signal receiver channel spatial phase mask portion (861, 961) arranged proximate to an end of that optical fiber, the respective incremental measurement signal receiver channel spatial phase mask portion having a respective spatial phase and having light-blocking elements arranged at a pitch that is operable for spatially filtering a spatially periodic intensity pattern that arises at a nominal receiver plane when the first diverging source light is received and reflected by the reflective periodic scale grating;
wherein:

the respective reference mark signals define a reference position that is repeatable to within less than one-half period of the spatially periodic incremental measurement signals within the signal crossing region proximate to the at least one reference mark portion.

**16.** The fiber optic readhead and scale arrangement of Claim 15, wherein:

the zero order reflection portion is a mirror portion; and
a light receiving area of each fiber optic reference mark signal receiver channel aperture is defined by at least one of a) a light carrying core area of a corresponding reference mark signal receiver channel optical fiber, and b) an aperture mask (820R1, 820BR1, 820R2, 820BR2, 920R1, 920BR1, 920BR1', 920R2, 920BR2, 920BR2') that includes no spatially periodic structure and that is located proximate the end of the corresponding reference mark signal receiver channel optical fiber to cover a portion of the light carrying core area.

17. The fiber optic readhead and scale arrangement of Claim 16, wherein the at least one reference mark portion and the first and second fiber optic reference mark signal receiver channels are configured such that [AR12SEP+(0.25*(AR12SPAN-AR12SEP))] < (2*LETOE) < [AR12SEP+(0.75*(AR12SPAN-AR12SEP))].

18. The fiber optic readhead and scale arrangement of Claim 17, wherein:

the first light source comprises the end of a source optical fiber;
the first and second reference mark signal receiver channel optical fibers and each of the respective incremental measurement signal receiver channel optical fibers are located parallel to and proximate to the source optical fiber; and
all optical fibers located within the first fiber optic readhead, including the source optical fiber, the first and second reference mark signal receiver channel optical fibers, and each of the respective incremental measurement signal receiver channel optical fibers, are located within a cylindrical volume having a diameter of at most 1.5 millimeters.

19. The fiber optic readhead and scale arrangement of Claim 18, wherein the cylindrical volume has a diameter of at most 1.0 millimeter.

20. The fiber optic readhead and scale arrangement of Claim 15, wherein the reflective periodic scale grating has a grating pitch of at least 2 micrometers and at most 8 micrometers.


**Patentansprüche**

1. Eine faseroptische Lesekopf- und Messanordnung (1000, 2000, 3000, 3000') zum Messen der relativen Verschiebung zwischen zwei Teilen entlang einer Messachsenrichtung (82) und zum Bereitstellen einer Bezugspositionsangabe, wobei die faseroptische Lesekopf- und Messanordnung aufweist:

mindestens einen ersten faseroptischen Lesekopf (200), wobei der erste faseroptische Lesekopf umfasst ein Licht-Quelle (680, 880, 980), die ein erstes divergierendes Quell-Licht (250, 350, 650, 850) ausgibt, und mindestens erste und zweite faseroptische Referenzmarkensignal-Empfängerkanäle, die betreibbar sind, um jeweilige Referenzmarkensignale (REF1, REF1', REF2, REF2') zu liefern; und
ein Messelement (81), umfassend mindestens eine erste Mess-Spur, die sich entlang einer Messachsenrichtung erstreckt, wobei die erste Mess-Spur umfasst:

einen ersten Spur-Abschnitt (88, 88'), umfassend ein Gitter, das eine erste Menge von Reflexion nullter Ordnung bereitstellt, wenn es durch das divergierende Quell-Licht beleuchtet wird; und
mindestens einen Referenzmarken-Abschnitt (251, 251', 351, 451, 50A, 50D1, 50D2), angeordnet innerhalb des ersten Spur-Abschnitts, wobei der zumindest eine Referenzmarken-Abschnitt eine zweite Menge von Reflexion nullter Ordnung bereitstellt, die verschieden ist von der ersten Menge von Reflexion nullter Ordnung, wenn er durch das divergierende Quell-Licht beleuchtet wird,

wobei:

der erste faseroptische Referenzmarkensignal-Empfängerkanal umfasst eine erste Referenzmarkensignal-Empfängerkanal-optische Faser (690R1, 690R1', 790R1, 790R1', 890R1, 990R1) und eine erste Referenzmarkensignal-Empfängerkanal-Blende, der zweite faseroptische Referenzmarkensignal-Empfängerkanal umfasst eine zweite Referenzmarkensignal-Empfängerkanal-optische Faser (690R2, 690R2', 790R2, 790R2', 890R2, 990R2) und eine zweite Referenzmarkensignal-Empfängerkanal-Blende, und wenn der erste faseroptische Lesekopf operativ relativ zu der ersten Mess-Spur positioniert ist, werden die Grenzen der ersten und der zweiten Referenzmarkensignal-Empfängerkanal-Blenden, die am nächsten zueinander sind, durch eine Dimension AR12SEP entlang der Messachsenrichtung getrennt, und die Grenzen der ersten und der zweiten Referenzmarkensignal-Empfängerkanal-Blenden, die am weitesten voneinander entfernt sind, umfassen eine Gesamtblendenspandimension AR12SPAN entlang der Messachsenrichtung;
der mindestens eine Referenzmarken Abschnitt ist so konfiguriert, dass zwei Referenzmarken-Abschnittsgrenzen durch eine Kante-zu-Kante-Abmessung LETOE entlang der Messachsenrichtung getrennt sind;
der mindestens eine Referenzmarken-Abschnitt und der erste und der zweite faseroptische Referenzmarkensignal-Empfängerkanal sind so konfiguriert, dass AR12SEP<(2*LETOE)<AR12SPAN; und

die entsprechenden Referenzmarkensignale definieren eine Referenzposition innerhalb einer Signalüberkreuzungsregion in der Nähe des mindestens einen Referenzmarken-Abschnitts.

2. Faseroptische Lesekopf- und Messanordnung nach Anspruch 1, wobei der mindestens eine Referenzmarken-Abschnitt und der erste und der zweite faseroptische Referenzmarkensignal-Empfängerkanal konfiguriert sind, dass [AR12SEP+(0.25*(AR12SPAN-AR12SEP))] < (2*LETOE) < [AR12SEP+(0.75*(ARI2SPAN-AR12SEP))].

3. Faseroptische Lesekopf- und Messanordnung nach Anspruch 2, wobei der mindestens eine Referenzmarken-Abschnitt und der erste und der zweite faseroptische Referenzmarkensignal-Empfängerkanal so konfiguriert sind, dass [AR12SEP+0.4*(AR12SPAN-AR12SEP)] < (2*LETOE) < [AR12SEP+0.6*(AR12SPAN-AR12SEP)].

4. Faseroptische Lesekopf- und Messanordnung nach Anspruch 1, wobei der mindestens eine Referenzmarken-Abschnitt aus einem einzigen Referenzmarken-Abschnitt besteht mit äußeren Grenzen, die durch die Kante-zu-Kante-Dimension LETOE getrennt sind.

5. Faseroptische Lesekopf- und Messanordnung nach Anspruch 1, wobei der mindestens eine Referenzmarken-Abschnitt erste und zweite Referenzmarken-Unterabschnitte umfasst, konfiguriert gemäß Konfiguration A (50D1, 50D2) oder Konfiguration B, wobei in Konfiguration A die inneren Grenzen der ersten und der zweiten Referenzmarken-Unterabschnitte, die am nächsten zueinander sind, durch die Kante-zu-Kante-Dimension LETOE getrennt sind, und in Konfiguration B die äußeren Grenzen der ersten und der zweiten Referenzmarken-Unterabschnitte, die am weitesten voneinander entfernt sind, durch die Kante-zu-Kante-Dimension LETOE getrennt sind.

6. Faseroptische Lesekopf- und Messanordnung nach Anspruch 5, wobei jeder der ersten und zweiten Referenzmarken-Unterabschnitte eine Dimension entlang der Messachsenrichtung hat, die mindestens 0,25 * (AR12SPAN-AR12SEP) und höchstens 0,75 * (AR12SPAN-AR12SEP) ist.

7. Faseroptische Lesekopf- und Messanordnung nach Anspruch 6, wobei jeder der ersten und zweiten Referenzmarken-Unterabschnitte eine Dimension entlang der Messachsenrichtung hat, die mindestens 0,4 * (AR12SPAN-AR12SEP) und höchstens 0,6 * (AR12SPAN-AR12SEP) ist.

8. Faseroptische Lesekopf- und Messanordnung nach Anspruch 1, wobei das erste divergierende Quell-Licht räumlich kohärent und monochromatisch ist, wobei der erste Spur-Abschnitt eines der folgenden ist:

    ein Phasengitterabschnitt, der konfiguriert ist, um Reflexion nullter Ordnung des ersten divergierenden Quell-Lichts zu unterdrücken;
    und ein Reflexions-Abschnitt nullter Ordnung; und wobei der mindestens eine Referenzmarken-Abschnitt das andere der genannten ist:
    ein Phasengitterabschnitt, der konfiguriert ist, um Reflexion nullter Ordnung des ersten divergierenden Quell-Lichts zu unterdrücken;
    und ein Reflexions-Abschnitt nullter Ordnung.

9. Faseroptische Lesekopf- und Messanordnung nach Anspruch 8, wobei der Reflexions-Abschnitt nullter Ordnung ein Spiegelabschnitt ist.

10. Faseroptische Lesekopf- und Messanordnung nach Anspruch 1, wobei:

    ein Lichtempfangsbereich einer jeden faseroptischen Referenzmarkensignal-Empfängerkanal-Blende definiert ist durch mindestens eines der folgenden:

        a) ein lichtführender Kernbereich einer zugehörigen Referenzmarkensignal-Empfängerkanal-optischen Faser, und
        b) eine Blendenmaske (820R1, 820BR1, 820R2, 820BR2, 920R1, 920BR1, 920BR1', 920R2, 920BR2, 920BR2'), die keine räumlich-periodische Struktur umfasst und die sich nahe dem Ende der entsprechenden Referenzmarkensignal-Empfängerkanal-optischen Faser befindet, um einen Teil des lichtführenden Kernbereichs abzudecken.

11. Faseroptische Lesekopf- und Messanordnung nach Anspruch 1, wobei:

das erste Quell-Licht das Ende einer Quell-optischen Faser aufweist;

die ersten und zweiten Referenzmarkensignal-Empfängerkanal-optischen Fasern parallel zu und nahe zu der Quell-optischen Faser angeordnet sind; und alle optischen Fasern in dem ersten faseroptischen Lesekopf, einschließlich der Quell-optischen Faser und der ersten und zweiten Referenzmarkensignal-Empfängerkanal-optischen Fasern, innerhalb eines zylindrischen Volumens mit einem Durchmesser von höchstens 1,5 mm angeordnet sind.

12. Faseroptische Lesekopf- und Messanordnung nach Anspruch 11, wobei das zylindrische Volumen einen Durchmesser von höchstens 1,0 mm aufweist.

13. Faseroptische Lesekopf- und Messanordnung nach Anspruch 1, ferner umfassend:

eine zweite Mess-Spur, angeordnet auf dem Messelement in der Nähe der ersten Mess-Spur, die zweite Mess-Spur umfassend:

eine reflektierendes periodisches Messgitter, das sich entlang der Messachsenrichtung erstreckt; und einen zweiten faseroptischen Lesekopf (100), angeordnet in der Nähe des ersten faseroptischen Lesekopfs, der zweite faseroptische Lesekopf umfassend eine zweite Lichtquelle, die ein zweites divergierendes Quell-Licht ausgibt, umfassend räumlich-kohärentes monochromatisches Licht, und eine Vielzahl von jeweiligen faseroptischen Inkremental-Mess-Signalempfängerkanälen, die betreibbar sind zum Bereitstellen jeweiliger räumlich-periodischer inkrementaler Mess-Signale, wobei jeder jeweilige faseroptische Inkremental-Mess-Signalempfängerkanal umfasst:

eine jeweilige Inkremental-Mess-Signalempfangskanal-optische Faser (130) und einen jeweiligen Abschnitt einer Inkremental-Mess-Signalempfangskanal-räumlichen Phasenmaske (161), angeordnet nahe einem Ende dieser optischen Faser, der jeweilige Abschnitt einer Inkremental-Mess-Signalempfangskanal-räumlichen Phasenmaske aufweisend eine jeweilige räumliche Phase und aufweisend Licht-blockierende Elemente, angeordnet mit einem Abstand, der betreibbar ist für räumliches Filtern eines räumlich-periodischen Intensitätsmusters, das bei einer Nominalempfängerebene (160) entsteht, wenn das zweite divergierende Quell-Licht empfangen und durch die reflektierenden periodischen Messgitter reflektiert wird, wobei:

die faseroptische Lesekopf- und Messanordnung ist derart konfiguriert, dass der erste und der zweite faseroptische Lesekopf relativ zueinander fixiert sind,

die entsprechenden Referenzmarkensignale definieren eine Referenzposition, die wiederholbar ist innerhalb weniger als einer halben Periode der räumlich-periodischen Inkremental-Mess-Signale in dem Signalüberkreuzungsbereich in der Nähe des mindestens einen Referenzmarken-Abschnitts.

14. Faseroptische Lesekopf- und Messanordnung nach Anspruch 13, wobei:

das erste divergierende Quell-Licht ist räumlich kohärent und monochromatisch;

der erste Spur-Abschnitt ist eines der folgenden:

ein Phasengitterabschnitt, der konfiguriert ist, um Reflexion nullter Ordnung des ersten divergierenden Quell-Lichts zu unterdrücken; und ein Reflexions-Abschnitt nullter Ordnung;

der mindestens eine Referenzmarken-Abschnitt ist das andere der genannten:

ein Phasengitterabschnitt, der konfiguriert ist, um Reflexion nullter Ordnung des ersten divergierenden Quell-Lichts zu unterdrücken; und ein Reflexions-Abschnitt nullter Ordnung;

das reflektierende periodische Messgitter der zweiten Mess-Spur ist ein Phasengitter, konfiguriert zum Unterdrücken von Reflexion nullter Ordnung des zweiten divergierenden Quell-Lichts; und das reflektierende periodische Messgitter der zweiten Mess-Spur und der Phasengitterabschnitt der ersten Mess-Spur haben jeweils nominell dieselbe Nischenhöhe zwischen ihren Gitterelementen.

**15.** Faseroptische Lesekopf- und Messanordnung nach Anspruch 1, wobei:

das erste divergierende Quell-Licht ist räumlich-kohärent und monochromatisch; die erste Mess-Spur umfasst ein reflektierendes periodisches Messgitter (80), das sich über einen Verschiebungsmessbereich entlang der Messachsenrichtung erstreckt,
wobei das reflektierende periodische Messgitter ein Phasengitter ist, das ausgebildet ist, Reflexion nullter Ordnung des ersten divergierenden Quell-Lichts zu unterdrücken;
der erste Spur-Abschnitt, der die erste Menge von Reflexion nullter Ordnung bereitstellt, wird bereitgestellt von einem Teil des reflektierenden periodischen Messgitters, das in der Nähe des mindestens einen Referenzmarken-Abschnitts ist;
der mindestens eine Referenzmarken-Abschnitt umfasst einen Abschnitt einer Reflexion nullter Ordnung; und
der erste faseroptische Lesekopf umfasst ferner eine Vielzahl von jeweiligen faseroptischen Inkremental-Mess-Signalempfangskanälen, die betreibbar sind zum Bereitstellen jeweiliger räumlich-periodischer Inkremental-Mess-Signale (A, A-, B, B-), wobei jeder jeweilige faseroptische Inkremental-Mess-Signalempfangskanal umfasst:

eine jeweilige Inkremental-Mess-Signalempfangskanal-optische Faser (890A, 890A', 890B, 890B', 990A, 990A', 990B, 990B') und einen jeweiligen Abschnitt einer Inkremental-Mess-Signalempfangskanal-räumlichen Phasenmaske (861, 961), angeordnet nahe einem Ende dieser optischen Faser, der jeweilige Abschnitt einer Inkremental-Mess-Signalempfangskanal-räumlichen Phasenmaske aufweisend eine jeweilige räumliche Phase und aufweisend Licht-blockierende Elemente, angeordnet mit einem Abstand, der betreibbar ist für räumliches Filtern eines räumlich-periodischen Intensitätsmusters, das bei einer Nominalempfängerebene entsteht, wenn das zweite divergierende Quell-Licht empfangen und durch das reflektierende periodische Messgitter reflektiert wird, wobei:

die entsprechenden Referenzmarkensignale definieren eine Referenzposition, die wiederholbar ist innerhalb weniger als einer halben Periode der räumlich-periodischen Inkremental-Mess-Signale in dem Signalüberkreuzungsbereich in der Nähe des mindestens einen Referenzmarken-Abschnitts.

**16.** Faseroptische Lesekopf- und Messanordnung nach Anspruch 15, wobei:

der Reflexions-Abschnitt nullter Ordnung ein Spiegelabschnitt ist; und
ein Lichtempfangsbereich einer jeden faseroptischen Referenzmarkensignal-Empfängerkanal-Blende definiert ist durch mindestens eines der folgenden:

a) ein lichtführender Kernbereich einer zugehörigen Referenzmarkensignal-Empfängerkanal-optischen Faser, und
b) eine Blendenmaske (820R1, 820BR1, 820R2, 820BR2, 920R1, 920BR1, 920BR1', 920R2, 920BR2, 920BR2'), die keine räumlich-periodische Struktur umfasst und die sich nahe dem Ende der entsprechenden Referenzmarkensignal-Empfängerkanal-optischen Faser befindet, um einen Teil des lichtführenden Kernbereichs abzudecken.

**17.** Faseroptische Lesekopf- und Messanordnung nach Anspruch 16, wobei der mindestens eine Referenzmarken-Abschnitt und der erste und der zweite faseroptische Referenzmarkensignal-Empfängerkanal so konfiguriert sind, dass [AR12SEP+(0.25*(AR12SPAN-AR12SEP))] < (2*LETOE) < [AR12SEP+(0.75*(AR12SPAN-AR12SEP))].

**18.** Faseroptische Lesekopf- und Messanordnung nach Anspruch 17, wobei:

das erste Quell-Licht das Ende einer Quell-optischen Faser aufweist;
die ersten und zweiten Referenzmarkensignal-Empfängerkanal-optischen Fasern parallel zu und nahe der Quell-optischen Faser angeordnet sind; und alle optischen Fasern in dem ersten faseroptischen Lesekopf, einschließlich der Quell-optischen Faser und der ersten und zweiten Referenzmarkensignal-Empfängerkanal-optischen Fasern und jede der jeweiligen Inkremental-Mess-Signalempfängerkanal-optischen Fasern, innerhalb eines zylindrischen Volumens mit einem Durchmesser von höchstens 1,5 mm angeordnet sind.

**19.** Faseroptische Lesekopf- und Messanordnung nach Anspruch 18, wobei das zylindrische Volumen einen Durchmesser von höchstens 1,0 mm aufweist.

**20.** Faseroptische Lesekopf- und Messanordnung nach Anspruch 15, wobei das reflektierende periodische Messgitter einen Gitterabstand von wenigstens 2 Mikrometern und höchstens 8 Mikrometern aufweist.

**Revendications**

**1.** Ensemble tête de lecture à fibre optique et échelle (1000, 2000, 3000, 3000') pour mesurer le déplacement relatif entre deux éléments suivant une direction d'axe de mesure (82) et pour fournir une indication de position de référence, lequel ensemble tête de lecture à fibre optique et échelle comprend :

au moins une première tête de lecture à fibre optique (200), la première tête de lecture à fibre optique comprenant une source de lumière (680, 880, 980) qui émet une première lumière de source divergente (250, 350, 650, 850), et au moins des premier et deuxième canaux récepteurs de signaux de marque de référence à fibre optique qui sont aptes à fournir des signaux de marque de référence (REF1, REF1', REF2, REF2') respectifs ; et un élément d'échelle (81) comprenant au moins une première piste d'échelle s'étendant suivant une direction d'axe de mesure, la première piste d'échelle comprenant :

une première portion de piste (88, 88') comprenant un réseau qui fournit une première quantité de réflexion d'ordre zéro lorsqu'elle est éclairée par la lumière de source divergente ; et au moins une portion de marque de référence (251, 251', 351, 451, 50A, 50D1, 50D2) située à l'intérieur de la première portion de piste, ladite au moins une portion de marque de référence fournissant une deuxième quantité de réflexion d'ordre zéro qui est différente de la première quantité de réflexion d'ordre zéro lorsqu'elle est éclairée par la lumière de source divergente,

dans lequel :

le premier canal récepteur de signaux de marque de référence à fibre optique comprend une première fibre optique de canal récepteur de signaux de marque de référence (690R1, 690R1', 790R1, 790R1', 890R1, 990R1) et une première ouverture de canal récepteur de signaux de marque de référence, le deuxième canal récepteur de signaux de marque de référence à fibre optique comprend une deuxième fibre optique de canal récepteur de signaux de marque de référence (690R2, 690R2', 790R2, 790R2', 890R2, 990R2) et une deuxième ouverture de canal récepteur de signaux de marque de référence, et, lorsque la première tête de lecture à fibre optique est positionnée fonctionnellement par rapport à la première piste d'échelle, les limites des première et deuxième ouvertures de canal récepteur de signaux de marque de référence qui sont les plus proches l'une de l'autre sont séparées par une dimension AR12SEP suivant la direction d'axe de mesure, et les limites des première et deuxième ouvertures de canal récepteur de signaux de marque de référence qui sont les plus éloignées l'une de l'autre couvrent une dimension d'étendue d'ouverture totale AR12SPAN suivant la direction d'axe de mesure ; ladite au moins une portion de marque de référence est configurée de façon que deux limites de portion de marque de référence soient séparées par une dimension bord à bord LETOE suivant la direction d'axe de mesure ; ladite au moins une portion de marque de référence et les premier et deuxième canaux récepteurs de signaux de marque de référence à fibre optique sont configurés de façon que AR12SEP < (2*LETOE) < AR12SPAN ; et les signaux de marque de référence respectifs définissent une position de référence à l'intérieur d'une région de croisement de signaux proche de ladite au moins une portion de marque de référence.

**2.** Ensemble tête de lecture à fibre optique et échelle selon la revendication 1, dans lequel ladite au moins une portion de marque de référence et les premier et deuxième canaux récepteurs de signaux de marque de référence à fibre optique sont configurés de façon que [AR12SEP + (0,25*(AR12SPAN - AR12SEP))] < (2*LETOE) < [AR12SEP + (0,75*(AR12SPAN - AR12SEP))].

**3.** Ensemble tête de lecture à fibre optique et échelle selon la revendication 2, dans lequel ladite au moins une portion de marque de référence et les premier et deuxième canaux récepteurs de signaux de marque de référence à fibre optique sont configurés de façon que [AR12SEP + 0.4*(AR12SPAN - AR12SEP)] < (2*LETOE) < [AR12SEP + 0.6*(AR12SPAN - AR12SEP)].

**4.** Ensemble tête de lecture à fibre optique et échelle selon la revendication 1, dans lequel ladite au moins une portion de marque de référence consiste en une seule portion de marque de référence ayant des limites extérieures qui sont séparées par la dimension bord à bord LETOE.

5. Ensemble tête de lecture à fibre optique et échelle selon la revendication 1, dans lequel ladite au moins une portion de marque de référence comprend des première et deuxième sous-portions de marque de référence, configurées selon la configuration A (50D1, 50D2) ou la configuration B, dans lequel, dans la configuration A, les limites intérieures des première et deuxième sous-portions de marque de référence qui sont les plus proches l'une de l'autre sont séparées par la dimension bord à bord LETOE, et, dans la configuration B, les limites extérieures des première et deuxième sous-portions de marque de référence qui sont les plus éloignées l'une de l'autre sont séparées par la dimension bord à bord LETOE.

6. Ensemble tête de lecture à fibre optique et échelle selon la revendication 5, dans lequel la première et la deuxième sous-portion de marque de référence ont une dimension suivant la direction d'axe de mesure qui est au moins 0,25*(AR12SPAN - AR12SEP) et au plus 0,75*(AR12SPAN - AR12SEP).

7. Ensemble tête de lecture à fibre optique et échelle selon la revendication 6, dans lequel la première et la deuxième sous-portion de marque de référence ont une dimension suivant la direction d'axe de mesure qui est au moins 0,4*(AR12SPAN - AR12SEP) et au plus 0,6*(AR12SPAN - AR12SEP).

8. Ensemble tête de lecture à fibre optique et échelle selon la revendication 1, dans lequel la première lumière de source divergente est spatialement cohérente et monochromatique, la première portion de piste est l'une parmi une portion de réseau de phase configurée pour supprimer une réflexion d'ordre zéro de la première lumière de source divergente et une portion de réflexion d'ordre zéro, et ladite au moins une portion de marque de référence est l'autre parmi une portion de réseau de phase configurée pour supprimer une réflexion d'ordre zéro de la première lumière de source divergente et une portion de réflexion d'ordre zéro.

9. Ensemble tête de lecture à fibre optique et échelle selon la revendication 8, dans lequel la portion de réflexion d'ordre zéro est une portion de miroir.

10. Ensemble tête de lecture à fibre optique et échelle selon la revendication 1, dans lequel :

une zone de réception de lumière de chaque ouverture de canal récepteur de signaux de marque de référence à fibre optique est définie par au moins une parmi a) une zone de noyau transportant la lumière d'une fibre optique de canal récepteur de signaux de marque de référence correspondante, et b) un masque d'ouverture (820R1, 820BR1, 820R2, 820BR2, 920R1, 920BR1, 920BR1', 920R2, 920BR2, 920BR2') qui ne comprend aucune structure spatialement périodique et qui est situé à proximité de l'extrémité de la fibre optique de canal récepteur de signaux de marque de référence correspondante pour couvrir une portion de la zone de noyau transportant la lumière.

11. Ensemble tête de lecture à fibre optique et échelle selon la revendication 1, dans lequel :

la première source de lumière comprend l'extrémité d'une fibre optique de source ;
les première et deuxième fibres optiques de canal récepteur de signaux de marque de référence sont situées parallèlement et à proximité de la fibre optique de source ; et
toutes les fibres optiques situées à l'intérieur de la première tête de lecture à fibre optique, y compris la fibre optique de source et les première et deuxième fibres optiques de canal récepteur de signaux de marque de référence, sont situées à l'intérieur d'un volume cylindrique ayant un diamètre d'au plus 1,5 millimètres.

12. Ensemble tête de lecture à fibre optique et échelle selon la revendication 11, dans lequel le volume cylindrique a un diamètre d'au plus 1,0 millimètre.

13. Ensemble tête de lecture à fibre optique et échelle selon la revendication 1, comprenant en outre :

une deuxième piste d'échelle (86) disposée sur l'élément d'échelle à proximité de la première piste d'échelle, la deuxième piste d'échelle comprenant un réseau d'échelle périodique réfléchissant (80) s'étendant suivant la direction d'axe de mesure, et
une deuxième tête de lecture à fibre optique (100) disposée à proximité de la première tête de lecture à fibre optique, la deuxième tête de lecture à fibre optique comprenant une deuxième source de lumière qui émet une deuxième lumière de source divergente comprenant une lumière monochromatique spatialement cohérente, et une pluralité de canaux récepteurs de signaux de mesure incrémentaux à fibre optique respectifs qui sont aptes à fournir des signaux de mesure incrémentaux spatialement périodiques respectifs, chaque canal récepteur de signaux de mesure incrémentaux à fibre optique respectif comprenant une fibre optique de canal récepteur de signaux de mesure incrémentaux respective (130) et une portion de masque de phase spatiale de canal récepteur de signaux de mesure incrémentaux (161) respective disposée à proximité d'une extrémité de cette fibre optique, la portion de masque de phase spatiale de canal récepteur de signaux de mesure incrémentaux respective ayant une phase spatiale respective et ayant des éléments bloquant la lumière disposés à un pas apte à filtrer spatialement un motif d'intensité spatialement périodique qui se produit sur un plan récepteur nominal (160) lorsque la deuxième lumière de source divergente est reçue et réfléchie par le réseau d'échelle périodique réfléchissant,
dans lequel :

l'ensemble tête de lecture à fibre optique et échelle est configuré de façon que les première et deuxième têtes de lecture à fibre optiques soient fixes l'une par rapport à l'autre,
les signaux de marque de référence respectifs définissent une position de référence dont la répétabilité est inférieure à une demi-période des signaux de mesure incrémentaux spatialement périodiques à l'intérieur de la région de croisement de signaux proche de ladite au moins une portion de marque de référence.

**14.** Ensemble tête de lecture à fibre optique et échelle selon la revendication 13, dans lequel :

la première lumière de source divergente est spatialement cohérente et monochromatique ;
la première portion de piste est l'une parmi une portion de réseau de phase configurée pour supprimer une réflexion d'ordre zéro de la première lumière de source divergente et une portion de réflexion d'ordre zéro ;
ladite au moins une portion de marque de référence est l'autre parmi une portion de réseau de phase configurée pour supprimer une réflexion d'ordre zéro de la première lumière de source divergente et une portion de réflexion d'ordre zéro ;
le réseau d'échelle périodique réfléchissant de la deuxième piste d'échelle est un réseau de phase configuré pour supprimer une réflexion d'ordre zéro de la deuxième lumière de source divergente ; et
le réseau d'échelle périodique réfléchissant de la deuxième piste d'échelle et la portion de réseau de phase de la première piste d'échelle ont chacun nominalement la même hauteur de retrait entre leurs éléments de réseau.

**15.** Ensemble tête de lecture à fibre optique et échelle selon la revendication 1, dans lequel :

la première lumière de source divergente est spatialement cohérente et monochromatique ;
la première piste d'échelle comprend un réseau d'échelle périodique réfléchissant (80) s'étendant sur une plage de mesure de déplacement suivant la direction d'axe de mesure, le réseau d'échelle périodique réfléchissant étant un réseau de phase configuré pour supprimer une réflexion d'ordre zéro de la première lumière de source divergente ;
la première portion de piste qui fournit la première quantité de réflexion d'ordre zéro est fournie par une portion du réseau d'échelle périodique réfléchissant qui est proche de ladite au moins une portion de marque de référence ;
ladite au moins une portion de marque de référence comprend une portion de réflexion d'ordre zéro ; et
la première tête de lecture à fibre optique comprend en outre une pluralité de canaux récepteurs de signaux de mesure incrémentaux à fibre optique respectifs qui sont aptes à fournir des signaux de mesure incrémentaux spatialement périodiques (A, A-, B, B-) respectifs, chaque canal récepteur de signaux de mesure incrémentaux à fibre optique respectif comprenant une fibre optique de canal récepteur de signaux de mesure incrémentaux (890A, 890A', 890B, 890B', 990A, 990A', 990B, 990B') respective et une portion de masque de phase spatiale de canal récepteur de signaux de mesure incrémentaux (861, 961) respective disposée à proximité d'une extrémité de cette fibre optique, la portion de masque de phase spatiale de canal récepteur de signaux de mesure incrémentaux respective ayant une phase spatiale respective et ayant des éléments bloquant la lumière disposés à un pas apte à filtrer spatialement un motif d'intensité spatialement périodique qui se produit sur un plan récepteur nominal lorsque la première lumière de source divergente est reçue et réfléchie par le réseau d'échelle périodique réfléchissant ;
dans lequel :

les signaux de marque de référence respectifs définissent une position de référence dont la répétabilité est inférieure à une demi-période des signaux de mesure incrémentaux spatialement périodiques à l'intérieur de la région de croisement de signaux proche de ladite au moins une portion de marque de référence.

16. Ensemble tête de lecture à fibre optique et échelle selon la revendication 15, dans lequel :

la portion de réflexion d'ordre zéro est une portion de miroir ; et
une zone de réception de lumière de chaque ouverture de canal récepteur de signaux de marque de référence à fibre optique est définie par au moins une parmi a) une zone de noyau transportant la lumière d'une fibre optique de canal récepteur de signaux de marque de référence correspondante, et b) un masque d'ouverture (820R1, 820BR1, 820R$_2$, 820BR2, 920R1, 920BR1, 920BR1', 920R2, 920BR2, 920BR2') qui ne comprend aucune structure spatialement périodique et qui est situé à proximité de l'extrémité de la fibre optique de canal récepteur de signaux de marque de référence correspondante pour couvrir une portion de la zone de noyau transportant la lumière.

17. Ensemble tête de lecture à fibre optique et échelle selon la revendication 16, dans lequel ladite au moins une portion de marque de référence et les premier et deuxième canaux récepteurs de signaux de marque de référence à fibre optique sont configurés de façon que [AR12SEP + (0,25*(AR12SPAN - AR12SEP))] < (2*LETOE) < [AR12SEP + (0,75*(AR12SPAN - AR12SEP))].

18. Ensemble tête de lecture à fibre optique et échelle selon la revendication 17, dans lequel :

la première source de lumière comprend l'extrémité d'une fibre optique de source ;
les première et deuxième fibres optiques de canal récepteur de signaux de marque de référence et chacune des fibres optiques de canal récepteur de signaux de mesure incrémentaux respectives sont situées parallèlement à et à proximité de la fibre optique de source ; et
toutes les fibres optiques situées à l'intérieur de la première tête de lecture à fibre optique, y compris la fibre optique de source, les première et deuxième fibres optiques de canal récepteur de signaux de marque de référence et chacune des fibres optiques de canal récepteur de signaux de mesure incrémentaux respectives, sont situées à l'intérieur d'un volume cylindrique ayant un diamètre d'au plus 1,5 millimètres.

19. Ensemble tête de lecture à fibre optique et échelle selon la revendication 18, dans lequel le volume cylindrique a un diamètre d'au plus 1,0 millimètre.

20. Ensemble tête de lecture à fibre optique et échelle selon la revendication 15, dans lequel le réseau d'échelle périodique réfléchissant a un pas de réseau d'au moins 2 micromètres et d'au plus 8 micromètres.

**Fig.1.**

**Fig.2.**

330

3000

395

300

301

354

360

350

80

361

355

81

351

353

Z

Y

X, 82

**Fig.3.**

330

3000'

395

300

301

354

360

350

361

89

80

355

81

451

451'

353

Z

Y

X, 82

**Fig.4.**

500

50-M

80

LETOE

$P_g$

$W_E$  $W_G$

$H_E$

G  E

E  G  E  G  E  G  E

81

Y  Z

X, 82

*Fig.5.*

Fig.6A.

*Fig.6B.*

*Fig. 7.*

*Fig. 8.*

**Fig.9.**

*Fig.10.*

**Fig.11.**

Fig.12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6906315 B
- US 7053362 B
- US 7126696 B